Europäisches Patentamt

European Patent Office

Office européen des brevets

(19)

(11) **EP 1 713 250 A2**

(12) **EUROPEAN PATENT APPLICATION**

(43) Date of publication:
**18.10.2006 Bulletin 2006/42**

(51) Int Cl.:
***H04N 3/15*** (2006.01)

(21) Application number: **06252018.4**

(22) Date of filing: **11.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.04.2005 JP 2005116931**
**10.02.2006 JP 2006033791**

(71) Applicant: **SHARP KABUSHIKI KAISHA**
**Osaka-shi, Osaka 545-8522 (JP)**

(72) Inventor: **Koyama, Eiji**
**Soraku-gun**
**Kyoto (JP)**

(74) Representative: **Treeby, Philip David William et al**
**R.G.C. Jenkins & Co.,**
**26 Caxton Street**
**London SW1H 0RJ (GB)**

(54) **Amplifying solid-state imaging device**

(57) A signal charge is transferred from a photodiode (1) to a signal charge storage portion (8) through a depletion mode transfer transistor (2). A reset transistor (5) is connected between an input terminal and an output terminal of a MOS transistor (3). A vertical scanning circuit (25) always turns on the reset transistor (5) during a non-read period of the signal charge to make short circuit between input and output of the MOS transistor (3), thereby stopping amplification operation of the MOS transistor (3). An excessive signal charge generated in the photodiode (1) at the time of imaging a high-luminance subject is discharged to a vertical signal line (9) through a drain path constituted of the depletion mode transfer transistor (2), the signal charge storage portion (8) and the reset transistor (5). A switch circuit (13) performs switchover of the vertical signal line (9) between a reset voltage (VDD) and a constant current load transistor (4).

Fig.1

EP 1 713 250 A2

**Description**

BACKGROUND OF THE INVENTION

The present invention relates to amplifying solid-state imaging devices and relates, in particular, to an amplifying solid-state imaging device capable of providing a low-noise high-quality image even with a small pixel size.

Conventionally, an amplifying solid-state imaging device, which has a pixel section that has an amplification function and a scanning circuit provided at the periphery of the pixel section and reads pixel data by the scanning circuit, has been proposed as the amplifying solid-state imaging device. In particular, an APS (Active Pixel Sensor) type image sensor constructed of CMOSs (Complementary Metal Oxide Semiconductors) advantageous for the integration of the pixel construction with a peripheral drive circuit and a signal processing circuit is known.

In the APS type image sensor, a photoelectric conversion portion, a transfer portion, an amplification part, a pixel selection portion and a reset portion need to be formed normally in one pixel. Therefore, the APS type image sensor employs four MOS transistors besides a photoelectric conversion portion that is normally constructed of a photodiode.

However, if four MOS transistors are necessary for one pixel, it becomes a restriction on the reduction in the pixel size. Accordingly, a method for reducing the transistor count per pixel is proposed (refer to JP H11-112018, H takahashi et al., ISSCC Digest of Technical Papers, pp.108-109 (2004)).

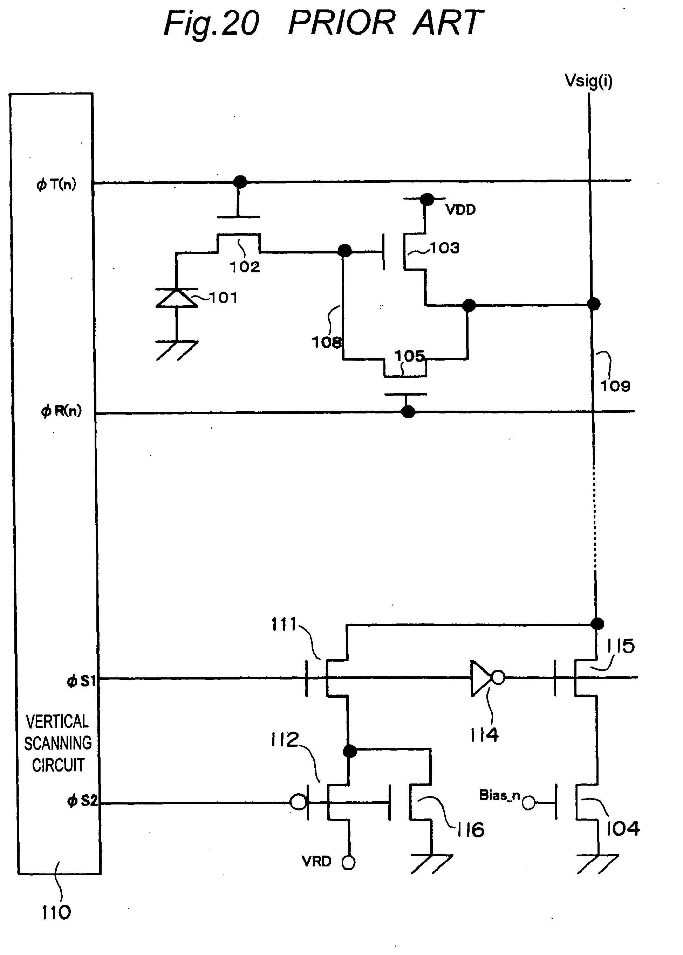

Fig. 20 shows a circuit diagram of essential part of an amplifying solid-state imaging device in which the transistor count per pixel is reduced. The amplifying solid-state imaging device includes a photodiode 101, a transfer transistor 102 for transferring a signal charge accumulated in the photodiode 101, a reset transistor 105 and an amplification transistor 103. In this case, it is known that remarkable noise reduction can be achieved and a high-quality image can be obtained if the photodiode 101 is of a buried type and signal charge transfer from the photodiode 101 is made complete. Moreover, a constant current load transistor 104 is provided for each column, and a source follower circuit is constituted by combining the constant current load transistor 104 with the amplification transistor 103.

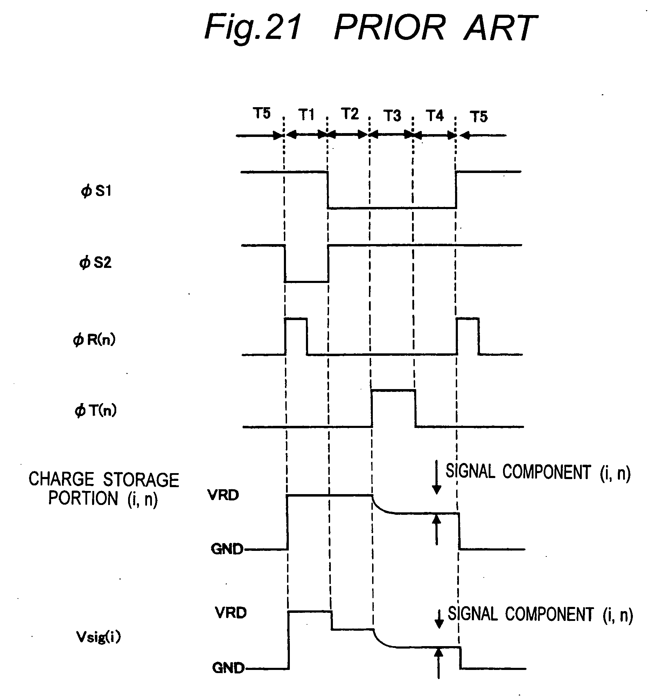

The operation of the amplifying solid-state imaging device shown in Fig. 20 is shown in the timing chart of Fig. 21. As shown in Fig. 21, a drive pulse φS1 from a vertical scanning circuit 110 has high level and a drive pulse φS2 has low level during a period T1. Therefore, transistors 111 and 112 are turned on, and the potential of a vertical signal line 109 is set to a reference potential VRD for resetting. Moreover, during the period T1, a drive pulse φR (n) from the vertical scanning circuit 110 inputted to the gate terminal of the reset transistor 105 changes in order of low level, high level and low level, and the potential of a signal charge storage portion 108 is reset to the potential voltage VRD.

Next, during a period T2, since the drive pulse φS1 from the vertical scanning circuit 110 has low level, a transistor 115 to which the drive pulse φS1 is inputted via an inverter 114 is turned on to connect the constant current load transistor 104 to the vertical signal line 109. The constant current load transistor 104 and the amplification transistor 103 are combined with each other to serve as a source follower circuit, and an output from the source follower circuit that receives the voltage of the charge storage portion 108 reset to the reference potential VRD as an input is outputted to the vertical signal line 109.

Next, during a period T3, a drive pulse φT(n) from the vertical scanning circuit 110 goes high level to turn on the transfer transistor 102, and the signal charge accumulated in the photodiode 101 is transferred to the signal charge storage portion 108.

After the transfer of the signal charge, during a period T4, the drive pulse φT(n) from the vertical scanning circuit 110 goes low level, and the transfer transistor 102 is set back to OFF-state. At this time, a voltage shifted by the transferred signal charge from the voltage reset to the reference potential VRD appears at the charge storage portion 108. At the same time, an output from the source follower circuit that receives the shifted voltage as an input is outputted to the vertical signal line 109.

Next, during a period T5, drive pulses φS1 and φS2 from the vertical scanning circuit 110 go high level, and the transistors 111 and 116 are turned on, and the voltage of the vertical signal line 109 is set to the ground potential. Moreover, during the period T5, the potential of the signal charge storage portion 108 is maintained at the ground potential by charging the gate of the reset transistor 105 in order of low level, high level and low level.

If a signal of a difference between the voltage of the period T2 and the voltage of the period T4 is taken by a CDS (Correlated Double Sampling) circuit, a differential amplifier circuit or a clamping circuit (since these circuits are well-known to those skilled in the art, no description is provided for the circuits in the present specification) in the subsequent stage on the vertical Signal line 109, then an effective signal due to the electric charge generated by the light incident on the photodiode 101 is read.

Then, after one horizontal scanning period (1H), operations similar to the operations during the periods T1 through T5 are carried out on the next selected (n+1)-th row (n: natural number). At this time, the state during the period T5 is kept in the non-selected n-th row, the reset transistor 105 is off, and the potential of the signal charge storage portion 108 is maintained at the ground potential. Therefore, the amplification transistor 103 does not operate since the input voltage is at the ground potential. Therefore, the row select transistor, which has conventionally been necessary in one pixel, becomes unnecessary, and the transistor count per pixel can be reduced.

However, the following problems occur in the construction and operation of the conventional amplifying solid-state imaging device. That is, as a measure to prevent the significant deterioration of an image as a consequence of an excessive signal charge overflowing to the surrounding photodiodes due to blooming at the time of imaging a high-luminance subject, it is necessary to provide the transfer transistor 102 of a depletion mode and provide a drain path from the photodiode 101 to the signal charge storage section 108 via the transfer transistor 102. In the case of the conventional amplifying solid-state imaging device, when it is tried to maintain the potential of the signal charge storage portion 108 at the ground potential during the period T5, a trouble that the electric charge is disadvantageously reversely injected into the photodiode 101 via the depletion mode transfer transistor 102 so that signal charge information in the photodiode 101 is lost occurs. Moreover, it is also possible to maintain a high potential that causes no electric charge injection into the photodiode 101 instead of the ground potential. However, in the case, the input voltage of the amplification transistor 103 does not always become an inoperative voltage, and a row select transistor becomes necessary. That is, to reduce the transistor count per pixel by eliminating the row select transistor becomes incompatible with a blooming suppression function at the time of imaging a high-luminance subject.

SUMMARY OF THE INVENTION

An object of the present invention is to provide an amplifying solid-state imaging device capable of reducing the pixel size and obtaining a high-quality image.

In order to achieve the object, there is provided an amplifying solid-state imaging device comprising:

a plurality of photoelectric conversion and transfer sections which respectively have a photoelectric conversion element and a transfer transistor that transfers a signal charge of the photoelectric conversion element and are each provided for each pixel;

at least one charge amplification part, which has an input terminal connected to a signal charge storage portion to which an output side of the transfer transistor of the photoelectric conversion and transfer section is connected and an output terminal connected to a signal line, amplifies and reads a quantity of the signal charge, and is included in the pixel; and ,

at least one voltage input mechanism that applies a voltage from the signal line side to the signal charge storage portion by short-circuiting the input terminal and the output terminal of the charge amplification part during a non-read period of the signal charge.

According to the construction, the voltage is applied from the signal line side to the signal charge storage portion by always short-circuiting the input terminal and the output terminal of the charge amplification part during the non-read period of the signal charge by the voltage input mechanism. Because the amplification operation of the charge amplification part is stopped by thus consistently short-circuiting the input terminal and the output terminal of the charge amplification part during the non-read period of the signal charge, the select transistor, which has conventionally been necessary for the unit pixel, becomes unnecessary. Therefore, the transistor count per pixel can be reduced, and the pixel size can be reduced.

Moreover, by allocating the area equivalent to the areal reduction for the transistor to the photoelectric conversion element, an amplifying solid-state imaging device of high sensitivity can be provided even if the pixel size is small.

In one embodiment, the photoelectric conversion element is a buried type photodiode, and the transfer transistor is of a depletion mode.

Since the photoelectric conversion element is the buried type photodiode in the embodiment, the transfer of the signal charge from the photoelectric conversion element can be made complete, and a low-noise higher-quality image can be obtained. Moreover, since the transfer transistor is of the depletion mode, blooming can be suppressed even at the time of imaging a high-luminance subject by discharging the excessive signal charge generated in the photodiode at the time of imaging the high-luminance subject through the transfer transistor, and a satisfactory image can be obtained.

In one embodiment, the charge amplification part is comprised of a MOS transistor of a source follower type, of which the input terminal is its gate and the output terminal is its source, and the voltage input mechanism stops amplification operation of the charge amplification part by short-circuiting the gate and the source of the MOS transistor during the non-read period of the signal charge.

In the embodiment, the voltage input mechanism consistently short-circuits the gate and the source of the MOS transistor during the non-read period of the signal charge, thereby eliminating the voltage difference between the gate and the source, cutting off the operating current and making the amplification operation inoperative. Therefore, the select transistor, which has conventionally been necessary for the unit pixel, becomes unnecessary, and the pixel size can be reduced.

In one embodiment,the voltage input mechanism comprises:

> a reset transistor connected between the input terminal and the output terminal of the charge amplification part;
> a switch circuit that performs switchover of a voltage of the signal line to a constant voltage; and
> a control section that turns on the reset transistor during the non-read period of the signal charge.

In the embodiment, the control section that is part of the voltage input mechanism controls the reset transistor consistently in the ON-state during the non-read period of the signal charge, thereby short-circuiting the signal line and the signal charge storage portion and making the charge amplification part inoperative. Therefore, the row select transistor, which has conventionally been necessary in one pixel, becomes unnecessary, and the transistor count per pixel can be reduced.

Moreover, though an excessive signal charge is generated in the photoelectric conversion element at the time of imaging a high-luminance subject, the excessive signal charge passes through the depletion mode transfer transistor and further through the signal charge storage portion and the reset transistor and is discharged to the signal line. As described above, the excessive signal charge generated in the photoelectric conversion element at the time of imaging a high-luminance subject is discharged to the signal line through the drain path constituted of the depletion mode transfer transistor, the signal charge storage portion and the reset transistor, and therefore, blooming at the time of imaging the high-luminance subject can be suppressed.

In one embodiment, the reset transistor is of a depletion mode.

Since the reset transistor is of the depletion mode in the embodiment, the constant voltage that is the reset voltage can be set to the power supply voltage when the input terminal and the output terminal of the charge amplification part are short-circuited to the constant voltage, and the dynamic range of the source follower circuit operation that constitutes the charge amplification part can sufficiently be secured.

Moreover, the blooming suppression function can be provided even at the time of imaging a high-luminance subject by the depletion mode transfer transistor and the depletion mode reset transistor. In detail, the greater part of the periods is the non-read period in each pixel, and the signal charge storage portion and the signal line are consistently short-circuited by the reset transistor during the non-read period, and the voltages of the signal charge storage portion and the signal line are reset to the reset voltage. Therefore, the excessive signal charge generated in the photoelectric conversion element at the time of imaging a high-luminance subject passes through the depletion mode transfer transistor and further through the signal charge storage portion and the reset transistor and is discharged to the signal line. Thus, the excessive signal charge generated in the photodiode at the time of imaging a high-luminance subject is discharged to the signal line through the drain path constituted of the depletion mode transfer transistor, the signal charge storage portion and the reset transistor, and therefore, blooming can be suppressed at the time of imaging the high-luminance subject.

In one embodiment, the reset transistor is of an enhancement mode,
the device comprising a voltage generation circuit that includes a transistor of a structure identical to a structure of the reset transistor and outputs the constant voltage to the switch circuit, wherein
the voltage generation circuit and the reset transistor are formed on an identical semiconductor substrate.

In the embodiment, the reset transistor and the voltage generation circuit are formed on the identical semiconductor substrate, and the voltage generation circuit includes the transistor of a structure identical to that of the reset transistor. Therefore, the characteristics of the threshold value and so on of the reset transistor and the transistor of the voltage generation circuit similarly change even in the presence of process variation and a temperature change. Therefore, the voltage generation circuit is able to consistently output an optimal constant voltage, i.e., the reset voltage even in the presence of process variation and a temperature change and to turn on the reset transistor with respect to the excessive signal charge without narrowing the dynamic range of the charge amplification part.

In one embodiment, the switch circuit performs switchover of the signal line between the constant voltage and a load circuit of a source follower type.

In the embodiment, the signal charge can be amplified with the source follower circuit construction during the read period of the signal charge by connecting the source follower type load circuit to the output side of the charge amplification part.

In one embodiment, output sides of the plurality of transfer transistors of the plurality of photoelectric conversion and transfer sections are connected to an input side of one charge amplification part, and the charge amplification part is shared by a plurality of pixels.

In the embodiment, the plurality of photoelectric conversion and transfer sections are to share the single charge amplification part, and this allows the transistor count per pixel to be further reduced and allows an amplifying solid-state imaging device of high sensitivity to be provided even with a small pixel size.

One embodiment comprises a power supply control mechanism that controls a voltage applied to a power line of the charge amplification part.

According to the embodiment, the reference voltage of the signal charge storage portion can be raised via the coupling capacitance of the power line and the signal charge storage portion by the power supply control mechanism, and the dynamic range of the operation of the charge amplification part can be widened.

In one embodiment, the power line of the charge amplification part and the signal charge storage portion, are arranged so as to have a coupling capacitance such that a voltage of the signal charge storage portion is raised when a voltage of the power line is raised by the power supply control mechanism.

In one embodiment, the power supply control mechanism performs switchover of the power line of the charge amplification part between a constant voltage and a floating potential.

In the embodiment, the reference voltage of the signal charge storage portion can be raised via the coupling capacitance of the power line and the signal charge storage portion by making the power line have the floating voltage and thereafter performing switchover to the constant voltage immediately before carrying out the read operation, and the dynamic range of the operation of the charge amplification part can be widened.

In one embodiment, the power supply control mechanism performs switchover of the power line of the charge amplification part between mutually different prescribed voltages.

According to the embodiment, the reference voltage of the signal charge storage portion can be raised via the coupling capacitance of the power line and the signal charge storage portion by making the power line have the low voltage and thereafter performing switchover of the power line to the high voltage immediately before carrying out the read operation, and the dynamic range of the operation of the charge amplification part can be widened.

In one embodiment, the power supply control mechanism performs switchover of the power line of the charge amplification part among mutually different prescribed voltages and a load circuit of a source follower type.

In the embodiment, the reference voltage of the signal charge storage portion can be raised via the coupling capacitance of the power line and the signal charge storage portion by making the power line have the high voltage out of the prescribed voltages (high voltage and low voltage) and thereafter performing switchover to the cathode follower type load circuit immediately before carrying out the read operation, and the dynamic range of the operation of the charge amplification part can be widened.

In one embodiment, the power supply control mechanism connects the power line of the charge amplification part with the prescribed voltage via a switchable low resistance or a high resistance.

In the embodiment, the reference voltage of the signal charge storage portion can be raised via the coupling capacitance of the power line and the signal , charge storage portion by connecting the power line with the prescribed voltage via the low resistance and thereafter performing switchover to connection via a high resistance immediately before carrying out the read operation, and the dynamic range of the operation of the charge amplification part can be widened.

As is apparent from the above, according to the amplifying solid-state imaging device of the present invention, the pixel size can be reduced, and an image of a high quality and a high dynamic range can be obtained.

Moreover, the amplifying solid-state imaging device of the present invention is extremely useful for the formation of a compact high-performance image sensor.

BRIEF DESCRIPTION OF THE DRAWINGS

The present invention will become more fully understood from the detailed description given hereinbelow and the accompanying drawings which are given by way of illustration only, and thus are not intended to limit the present invention, and wherein:

Fig. 1 is a circuit diagram showing the construction of a two-dimensional amplifying solid-state imaging device according to a first embodiment of the present invention;
Fig. 2 is a timing chart of drive pulses of the two-dimensional amplifying solid-state imaging device of the first embodiment of the present invention;
Fig. 3 is a timing chart of other drive pulses of the two-dimensional amplifying solid-state imaging device of the first embodiment of the present invention;
Fig. 4 is a circuit diagram showing the construction of a two-dimensional amplifying solid-state imaging device according to a second embodiment of the present invention;
Fig. 5 is a circuit diagram showing the construction of a voltage generation circuit of a two-dimensional amplifying solid-state imaging device according to a second embodiment of the present invention;
Fig. 6 is a circuit diagram showing the construction of a two-dimensional amplifying solid-state imaging device according to a third embodiment of the present invention;
Fig. 7 is a timing chart of drive pulses of the two-dimensional amplifying solid-state imaging device of the third embodiment of the present invention;
Fig. 8 is a circuit diagram showing the construction of a two-dimensional amplifying solid-state imaging device according to a fourth embodiment of the present invention;

Fig. 9 is a timing chart of drive pulses of the two-dimensional amplifying solid-state imaging device of the fourth embodiment of the present invention;

Fig. 10 is a circuit diagram showing the construction of a two-dimensional amplifying solid-state imaging device according to a fifth embodiment of the present invention;

Fig. 11 is a timing chart of drive pulses of the two-dimensional amplifying solid-state imaging device of the fifth embodiment of the present invention;

Fig. 12 is a circuit diagram showing the construction of a two-dimensional amplifying solid-state imaging device according to a sixth embodiment of the present invention;

Fig. 13 is a timing chart of drive pulses of the two-dimensional amplifying solid-state imaging device of the sixth embodiment of the present invention;

Fig. 14 is a circuit diagram showing the construction of a two-dimensional amplifying solid-state imaging device according to a seventh embodiment of the present invention;

Fig. 15 is a timing chart of drive pulses of the two-dimensional amplifying solid-state imaging device of the seventh embodiment of the present invention; ,

Fig. 16 is a circuit diagram showing the construction of a two-dimensional amplifying solid-state imaging device according to an eighth embodiment of the present invention;

Fig. 17 is a timing chart of drive pulses of the two-dimensional amplifying solid-state imaging device of the eighth embodiment of the present invention;

Fig. 18 is a circuit diagram showing the construction of a two-dimensional amplifying solid-state imaging device according to a ninth embodiment of the present invention;

Fig. 19 is a timing chart of drive pulses of the two-dimensional amplifying solid-state imaging device of the ninth embodiment of the present invention;

Fig. 20 is a circuit diagram showing the construction of a conventional two-dimensional amplifying solid-state imaging device;

Fig. 21 is a timing chart of drive pulses of the conventional two-dimensional amplifying solid-state imaging device.

## DETAILED DESCRIPTION OF THE INVENTION

The amplifying solid-state imaging device of the present invention will be described in detail below by the embodiments shown in the drawings. ,

## FIRST EMBODIMENT

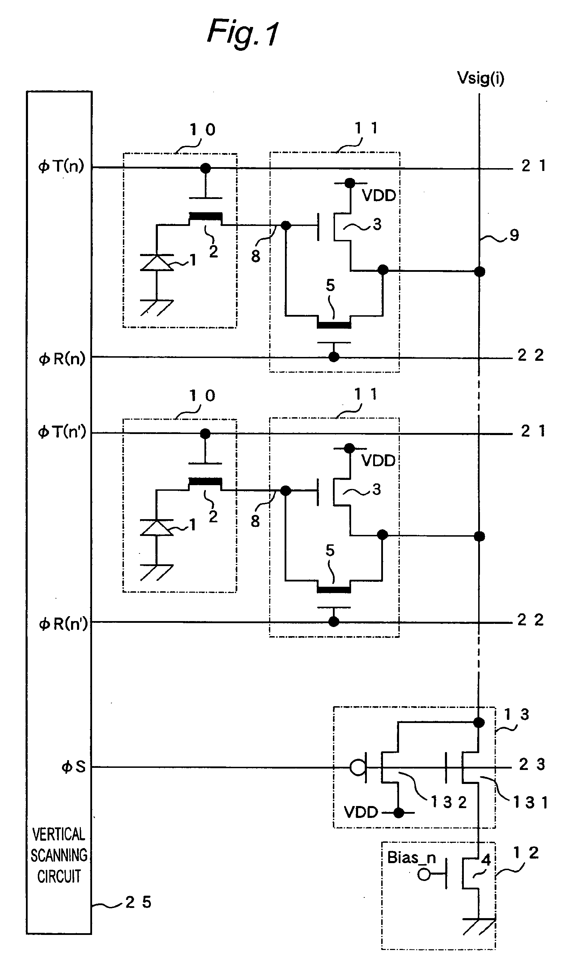

Fig. 1 is a circuit diagram showing the construction of a two-dimensional amplifying solid-state imaging device as one example of the amplifying solid-state imaging device of the first embodiment of the present invention.

The figure shows a photoelectric conversion and transfer section 11 existing in each of all the pixels, a charge amplification mechanism 11 included in the pixel, a constant current load circuit 12 constructed of a constant current load transistor 4 common to all the charge amplification mechanisms 11 existing in an i-th column (i: natural number), and a switch circuit 13 that performs switchover between the constant current load circuit 12 constructed of the constant current load transistor 4 and a constant voltage (power supply voltage VDD in Fig. 1). The reference numeral 25 denotes a vertical scanning circuit as one example of the control section. The photoelectric conversion and transfer section 10 and the charge amplification mechanism 11 constitute a pixel unit.

Fig. 1 shows only the n-th and n'-th rows and the i-th column of pixels arranged in a matrix form of a plurality of rows and a plurality of columns. It is noted that n, n' and i are natural numbers.

The photoelectric conversion and transfer section 10 is constructed of a photodiode 1 as one example of the photoelectric conversion element and a depletion mode transfer transistor 2.

Moreover, the charge amplification mechanism 11 is constructed of a signal charge storage portion 8 to which the output side of the transfer transistor 2 of the photoelectric conversion and transfer section 10 is connected, a MOS transistor 3 as one example of the charge amplification part whose output terminal is connected to a vertical signal line 9 that serves as a signal line, and a depletion mode reset transistor 5 connected between a gate as the input terminal and a source as the output terminal of the MOS transistor 3. The MOS transistor 3 constitutes a drain grounded type source follower circuit with the constant current load transistor 4.

Moreover, a switch circuit 13 is provided to perform switchover of the vertical signal line 9 between the constant current load circuit 12 and a constant voltage (power supply voltage VDD) that is a reset voltage. The switch circuit 13 is constructed of mutually antiphase switching transistors 131 and 132 controlled by a common pulse $\phi$S from the vertical scanning circuit 25.

The reset transistor 5, the vertical scanning circuit 25 and the switch circuit 13 constitute one example of the voltage input mechanism that applies the constant voltage (reset voltage) from the vertical signal line 9 side to the signal charge storage portion 8 by short-circuiting the gate and the source of the MOS transistor 3 during the non-read period of the signal charge.

As shown in Fig. 1, a transfer transistor drive signal line 21 from the vertical scanning circuit 25 is connected to the gates of the transfer transistors 2 of a plurality of photoelectric conversion and transfer sections 10 (only one is shown in Fig. 1) arranged in the direction of row. Moreover, a reset transistor drive signal line 22 from the vertical scanning circuit 25 is connected to the gate of the reset transistor 5 of the charge amplification mechanism 11. Moreover, a drive pulse φT(n) is applied from the vertical scanning circuit 25 to the gate of the transfer transistor 2 of the photoelectric conversion and transfer section 10 of the n-th row via the transfer transistor drive signal line 21, and a drive pulse φR(n) is applied from the vertical scanning circuit 25 to the gate of the reset transistor 5 of the charge amplification mechanism 11 of n-th row via the reset transistor drive signal line 22. Moreover, the drive pulse φS is applied from the vertical scanning circuit 25 to the gates of the mutually antiphase transistors 131 and 132 of the switch circuit 13 via the switch circuit drive signal line 23 in order to perform switchover of the vertical signal line 9 between the constant current load circuit 12 and the constant voltage (power supply voltage VDD).

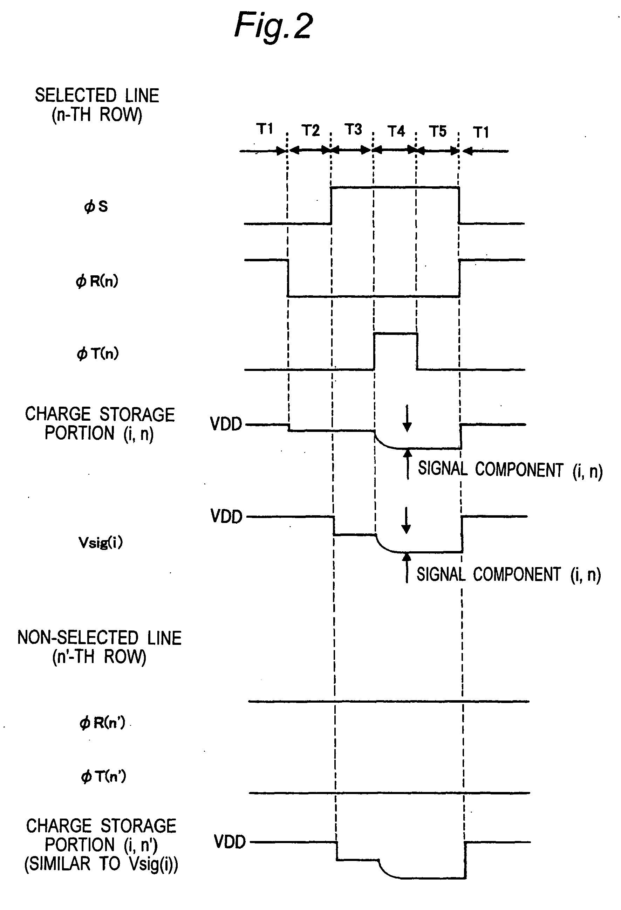

The operation of the two-dimensional amplifying solid-state imaging device shown in Fig. 1 is described with reference to Fig. 2. Reference is first made to a case where the selected row, i.e., the row to be read is the n-th row.

As shown in Fig. 2, during the period T1, the reset transistor 5 is in the ON-state since the drive pulse φR(n) applied to the gate of the reset transistor 5 of the charge amplification mechanism 11 of the n-th row has high level, and the vertical signal line 9 is connected to the power supply voltage VDD since the drive pulse φS inputted to the switch circuit 13 has low level. Therefore, the signal charge storage portion 8 and the vertical signal line 9 are both reset to the power supply voltage VDD.

Next, during the period T2, the drive pulse φR(n) goes low level, and the reset transistor 5 is turned off.

Next, during the period T3, the drive pulse φS goes high level, and the vertical signal line 9 is connected to the constant current load transistor 4. As a result, the output of the source follower circuit constructed of the MOS transistor 3 as the charge amplification part and the constant current load transistor 4 is outputted to the vertical signal line 9 using the signal charge storage portion 8 reset to the power supply voltage VDD as an input. The voltage of the vertical signal line 9 obtained at this time is the reference voltage of the pixel.

The next period T4 is the period during which the signal charge that has been photoelectrically converted by the photodiode 1 of the pixel is read to the signal charge storage portion 8. The drive pulse φT(n) goes high level to turn on the transfer transistor 2 of the n-th row, and the signal charge accumulated in the photodiode 1 of the n-th row is read to the signal charge storage portion 8 through the transfer transistor 2.

After the signal charge accumulated in the photodiode 1 is completely read to the signal charge storage portion 8, the drive pulse φT(n) goes low level during the next period T5, and the transfer transistor 2 is turned off. Consequently, a voltage shifted by a change due to the transfer of the signal charge from the voltage during the period T3 is maintained in the signal charge storage portion 8, and the maintained signal level (voltage) is amplified by the source follower circuit and outputted to the vertical signal line 9. The voltage of the vertical signal line 9 obtained at the time becomes the signal of the pixel. ,

In the next period, the voltages of the signal charge storage portion 8 and the vertical signal line 9 are both reset to the power supply voltage VDD as in the period T1.

If a signal of a difference between the voltage during the period T3 and the voltage during the period T5 is taken by a CDS (Correlated Double Sampling) circuit, a differential amplifier circuit or a clamping circuit (since these circuits are well-known to those skilled in the art, no description is provided for the circuits) in the subsequent stage on the vertical signal line 9, then an effective signal due to the electric charge generated by the incident light on the pixel of the n-th row is read.

The non-selected n'-th row is described next. When the n'-th row is non-selected, i.e., when the signal charge of the n'-th row is not read, a drive pulse φR (n') from the vertical scanning circuit 25 always has high level. Therefore, the reset transistor 5 of the charge amplification mechanism 11 of the n'-th row, to the gate of which the drive pulse φR (n') is applied, is always in the ON-state when non-selected, i.e., when the signal charge is not read. Therefore, the signal charge storage portion 8 and the vertical signal line 9 come to have same potential when the signal charge is not read. This means that the gate-to-source voltage of the MOS transistor 3 as the amplification part is 0 V, and the MOS transistor 3 as the amplification part of the non-selected n'-th row enters the OFF-state in which the drain-to-source current does not flow, consequently making the source follower circuit inoperative. On the other hand, since a drive pulse φT(n') applied to the gate of the transfer transistor 2 keeps low level, the transfer transistor 2 keeps OFF-state, and the signal charge from the photodiode 1 is not read to the charge storage portion 8.

Moreover, the greater part of the periods is the period T1 (non-read period) in each pixel, and the signal charge storage portion 8 and the vertical signal line 9 are short-circuited by the reset transistor 5 during the non-read period, as a consequence of which the voltages of the signal charge storage portion 8 and the vertical signal line 9 are reset to the power supply voltage VDD. Therefore, an excessive signal charge is generated in the photodiode 1 at the time of imaging a high-luminance subject. The excessive signal charge is discharged to the vertical signal line 9 through the depletion mode transfer transistor 2, which is turned on as a result that the source voltage is lowered due to the excessive signal charge consequently causing a rise in the voltage difference between the gate and the source and then causing the voltage difference close to zero, and further through , the signal charge storage portion 8 and the reset transistor 5. Since the excessive signal charge generated in the photodiode 1 at the time of imaging a high-luminance subject is discharged to the vertical signal line 9 through the drain path constituted of the depletion mode transfer transistor 2, the signal charge storage portion 8 and the reset transistor 5. Therefore, the two-dimensional amplifying solid-state imaging device comes to have a function to suppress the blooming at the time of imaging a high-luminance subject.

According to the two-dimensional amplifying solid-state imaging device of the construction, the vertical signal line 9 and the signal charge storage portion 8 are short-circuited by turning on the reset transistor 5 by the drive pulse φR (n') from the vertical scanning circuit 25 with regard to the non-selected n'-th row (non-read row). Therefore, the MOS transistor 3, which is the charge amplification part of the non-selected n'-th row, can be made inoperative without employing a row select transistor. As described above, the row select transistor, which has conventionally been necessary in one pixel, becomes unnecessary. Therefore, the transistor count per pixel can be reduced, and the pixel can be formed with a small size.

Moreover, by allocating the area equivalent to the areal reduction for the transistor to the photodiode, an amplifying solid-state imaging device of high sensitivity can be provided even if the pixel size is small.

Moreover, since the buried type photodiode 1 is employed as the photoelectric conversion element of the pixel, it is possible to make complete the transfer of the signal charge from the photodiode 1 and to obtain a low-noise higher-quality image, and the blooming suppression function can concurrently be provided even at the time of imaging a high-luminance subject.

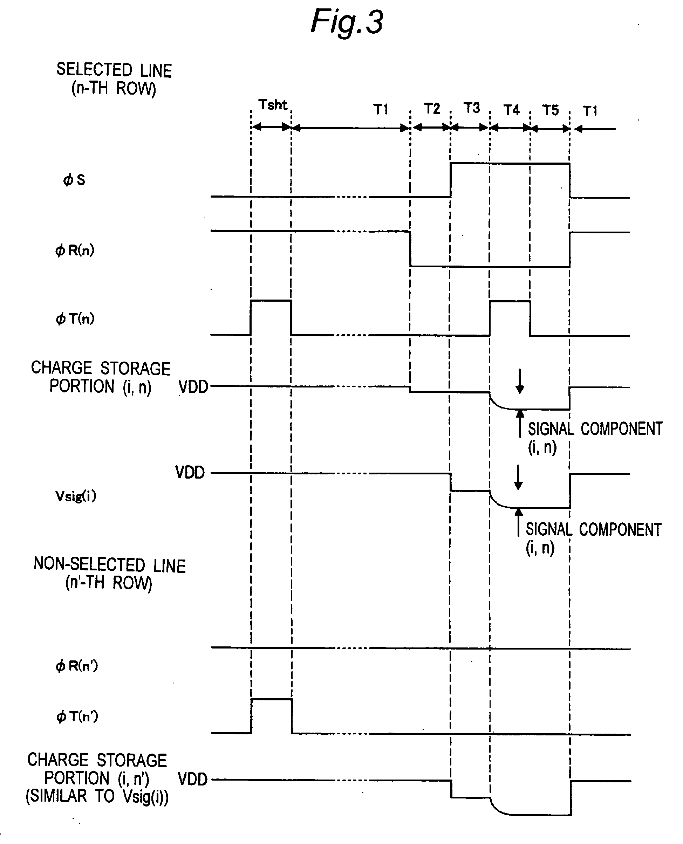

Fig. 3 is a timing chart for explaining other operations of the two-dimensional amplifying solid-state imaging device shown in Fig. 1. A difference from Fig. 2 resides in that a period Tsht exists before starting the read operation. This is intended to simultaneously reset all the pixels before the photoelectrically converted signal charge in the photodiode 1 is accumulated.

The drive pulse φS to the switch circuit 13 and the drive pulses φR(n) and φR(n') applied to the gates of the reset transistors 5 of all the rows are in the same state as in the period T1 during the period Tsht. Therefore, the vertical signal line 9 and the signal charge storage portion 8 are short-circuited, so that the vertical signal line 9 and the signal charge storage portion 8 are both maintained at the power supply voltage VDD. At the same time, the drive pulses φT (n) and φT(n') to the transfer transistors 2 in the photoelectric conversion and transfer sections 10 of all the pixels go high level, and the signal charge accumulated in the photodiode 1 is completely read to the signal charge storage portion 8 by the transfer transistor 2. Since the vertical signal line 9 and the signal charge storage portion 8 have the power supply voltage VDD, the signal charges accumulated in the photodiodes 1 of all the pixels are simultaneously swept away to the power supply voltage VDD. The accumulation of the photoelectric charge, i.e., the signal charge is simultaneously started in all the photodiodes 1 after the period Tsht, and the operation after the period T1 is similar to the sequence already described with reference to Fig. 2. As a result, the distortion of the image caused by the difference in the accumulation start times of photoelectric charges, which has conventionally been caused by the rolling shutter operation, can be prevented, and a satisfactory image free from a time distortion can be obtained.

SECOND EMBODIMENT

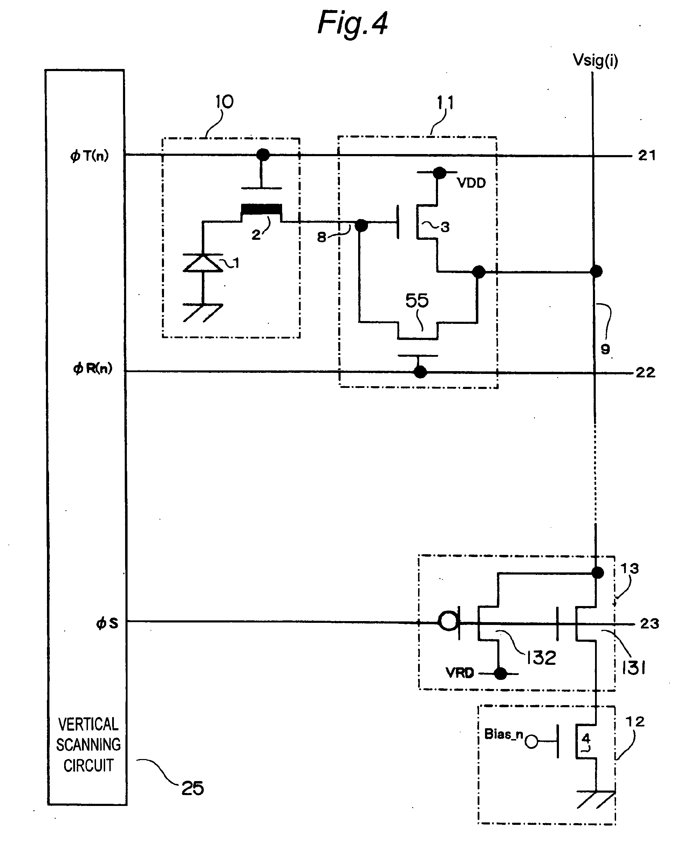

Fig. 4 is a circuit diagram showing the construction of a two-dimensional amplifying solid-state imaging device as one example of the amplifying solid-state imaging device of the second embodiment of the present invention. In Fig. 4, the same components as the components of the first embodiment shown in Fig. 1 are denoted by the same reference numerals, and no description is provided therefor.

In the second embodiment, a charge amplification mechanism 211 is constructed of a MOS transistor 3, a signal charge storage portion 8 and an enhancement mode reset transistor 55.

In the first embodiment shown in Fig. 1, an operable lower limit of the source follower circuit is determined by the potential of the vertical signal line 9 and the potential under the gate of the depletion mode reset transistor 5 when the depletion mode reset transistor 5 is off. When the potential of the vertical signal line 9 becomes not higher than the potential under the gate, injection of charge into the signal charge storage portion 8 from the vertical signal line 9 through the portion under the gate of the reset transistor 5 occurs, and the charge amplification of a normal signal charge (photoelectric charge) cannot be achieved.

Therefore, in the second embodiment shown in Fig. 4, the reset transistor 55 is of the enhancement mode as a measure against the phenomenon, and a constant voltage for resetting the signal charge storage portion 8 is set to a reset voltage VRD lower than the power supply voltage VDD so that the enhancement mode reset transistor 55 can be turned on (the reset voltage is set to the power supply voltage VDD in the first embodiment). In this case, the reset transistor 55 cannot be turned on with respect to the excessive signal charge when the reset voltage as a constant voltage is excessively high, while the operable upper limit of the source follower circuit is lowered and the dynamic range of the operation of the source follower circuit becomes narrow when the reset voltage is excessively low.

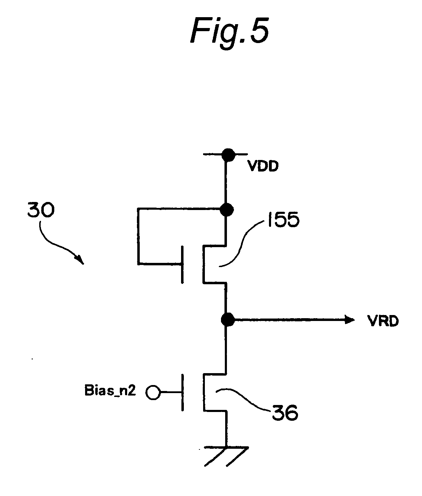

Accordingly, in the second embodiment, a voltage generation circuit 30 as shown in Fig. 5 is employed in order to consistently output an optimal reset voltage VRD following a process variation, a temperature change and so on. The voltage generation circuit 30 is constructed of a drive transistor 155 of the same structure as that of the reset transistor 55 and a constant current load transistor 36, and the reset voltage VRD is outputted to the switch circuit 13 from the connection point of the drive transistor 155 and the constant current load transistor 36. In this case, the fact that the reset transistor 55 and the drive transistor 155 have the same structure means that the configurations, dimensions and the materials of the transistors are substantially same. Further, although not shown, the reset transistor 55 and the voltage generation circuit 30 are formed on an identical semiconductor substrate.

As described above, the reset transistor 55 and the voltage generation circuit 30 are formed on the identical semiconductor substrate, while the reset transistor 55 and the drive transistor 155 have the identical structure. Therefore, the characteristics of the threshold values and so on of the reset transistor 55 and the drive transistor 155 similarly change even in the presence of a process variation and a temperature change. Therefore, it is possible to consistently output the optimal reset voltage VRD even in the presence of a process variation and a temperature change and to turn on the reset transistor 55 with respect to the excessive signal charge without narrowing the dynamic range of the source follower circuit.

THIRD EMBODIMENT

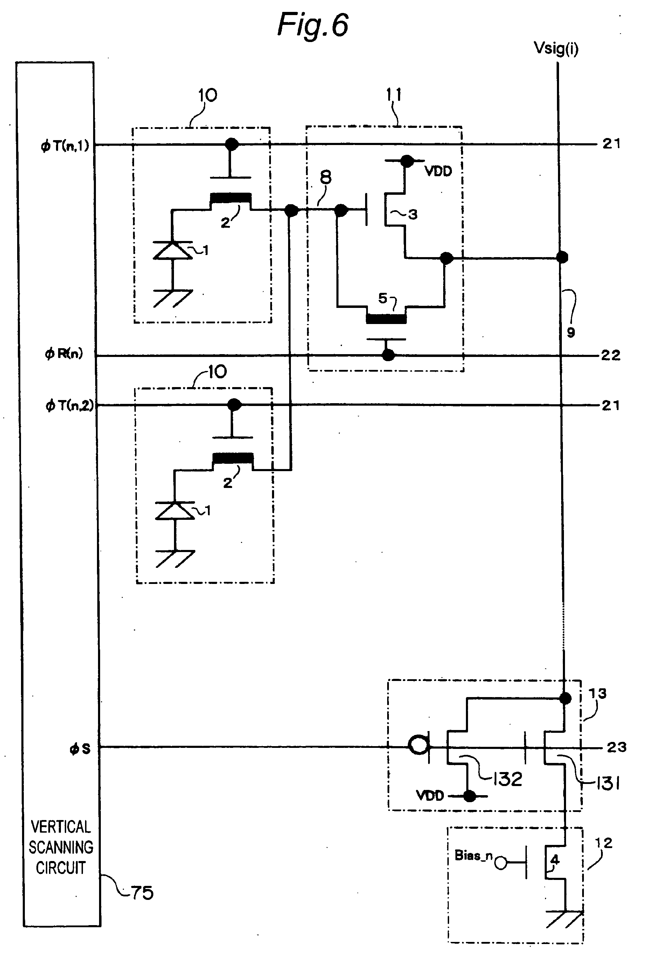

Fig. 6 is a circuit diagram showing the construction of a two-dimensional amplifying solid-state imaging device as one example of the amplifying solid-state imaging device of the third embodiment of the present invention. In Fig. 6, the same components as the components of the first embodiment shown in Fig. 1 are denoted by the same reference numerals, and no description is provided therefor.

The two-dimensional amplifying solid-state imaging device of the third embodiment has the same construction as that of the first embodiment except that two photoelectric conversion and transfer sections 10 and 10 share one charge amplification mechanism 11 and a vertical scanning circuit 75 is different from the vertical scanning circuit 25 of the first embodiment in accordance with it.

In Fig. 6, the only pixels of two rows and one column out of the pixels of a plurality of rows and a plurality of columns are shown, and the other rows and columns are not shown. In Fig. 6, every two rows are assumed to be a group, and the pixels of the n-th group and the i-th column are shown. In the present specification, the first row of the rows of the n-th group is represented as (n, 1) row, and the second row of the rows of the n-th group is represented as (n, 2) row.

Each of the pixels are constructed of the photoelectric conversion and transfer section 10 and the signal charge amplification mechanism 11, and the single signal charge amplification mechanism 11 is shared by the pixel of the (n, 1) row and the pixel of the (n, 2) row. That is, the single charge amplification mechanism 11 constructed of the single signal charge storage portion 8, the MOS transistor 3 as the single charge amplification part and the single reset transistor 5 is shared by the pixel of the (n, 1) row and the pixel of the (n, 2) row.

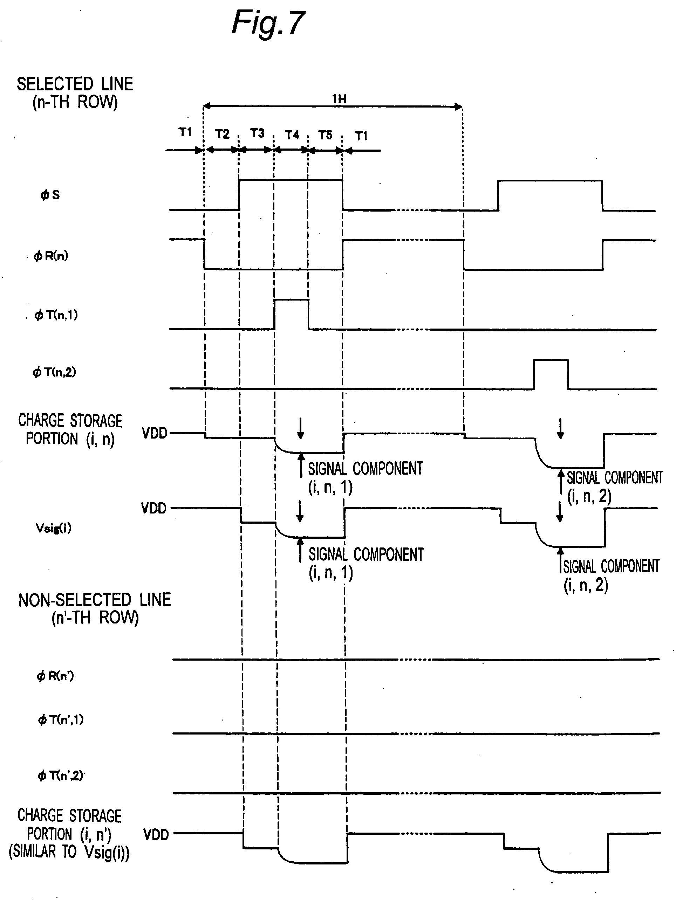

The operation of the two-dimensional amplifying solid-state imaging device of the third embodiment of Fig. 6 is described with reference to Fig. 7.

Reference is first made to a case where the (n, 1) row and the (n, 2) row of the n-th group are sequentially selected. As shown in Figs. 6 and 7, the operation during the periods T1 through T5 when the (n, 1) row is selected (read) is quite the same as the operation during the periods T1 through T5 shown in Fig. 2 when the pixel of the n-th row is selected in the first embodiment. As shown in Fig. 7, the drive pulse $\phi T(n, 1)$ from the vertical scanning circuit 75 goes high level, and the transfer transistor 2 of the (n, 1) row is turned on to transfer the signal charge accumulated in the photodiode 1 to the signal charge storage portion 8. Then, the signal charge from the MOS transistor 3 as the signal charge amplification part is amplified and read to the vertical signal line 9. After one horizontal scanning period (1H), the pixel of the (n, 2) row is similarly read. That is, a drive pulse $\phi T(n, 2)$ from the vertical scanning circuit 75 goes high level, and the transfer transistor 2 of the (n, 2) row is turned on to transfer the signal charge accumulated in the photodiode 1 to the signal charge storage portion 8. Then, the signal charge from the MOS transistor 3 as the signal charge amplification part is amplified and read to the vertical signal line 9.

Next, as shown in Fig. 7, the case of the non-selected n'-th row is quite the same as that of the example of the amplifying solid-state imaging device of the first embodiment of Fig. 1. That is, since the reset transistor 5 is in the ON-state due to the drive pulse $\phi R (n')$ from the vertical scanning circuit 75, the MOS transistor 3 for the amplification of the non-selected (during non-read) n'-th row does not operate as a source follower circuit.

As described above, in the two-dimensional amplifying solid-state imaging device, the vertical signal line 9 and the signal charge storage portion 8 are short-circuited by turning on the reset transistor 5 with regard to the non-selected row. Therefore, the MOS transistor 3 as the signal charge amplification part of the non-selected row can be made inoperative. Therefore, the row select transistor, which has conventionally been necessary in one pixel, becomes unnecessary, and the transistor count per pixel can be reduced.

Moreover, as in the first embodiment, the two-dimensional amplifying solid-state imaging device of the third embodiment comes to have a blooming suppression function even at the time of imaging a high-luminance subject by virtue of the functions of the depletion mode transfer transistor 2 and the depletion mode reset transistor 5.

Furthermore, the two-dimensional amplifying solid-state imaging device of the third embodiment includes one common portion 11 per two pixels, i.e., a single amplification mechanism 11 in two pixels. Therefore, four transistors/two pixels = two transistors/one pixel in the third embodiment in contrast to the three transistors/one pixel in the amplifying solid-state imaging device of the first embodiment. That is, in the amplifying solid-state imaging device of the third embodiment, the transistor count per pixel can further be reduced.

Although the photoelectric conversion and transfer sections 10 and 10 of two rows share one charge amplification mechanism 11 in the third embodiment, photoelectric conversion and transfer sections 10, 10, 10, ... of three or more rows may share a single charge amplification mechanism 11. In the case, the transistor count per pixel can further be reduced, and this can extremely contribute to the reduction in the pixel size.

FOURTH EMBODIMENT

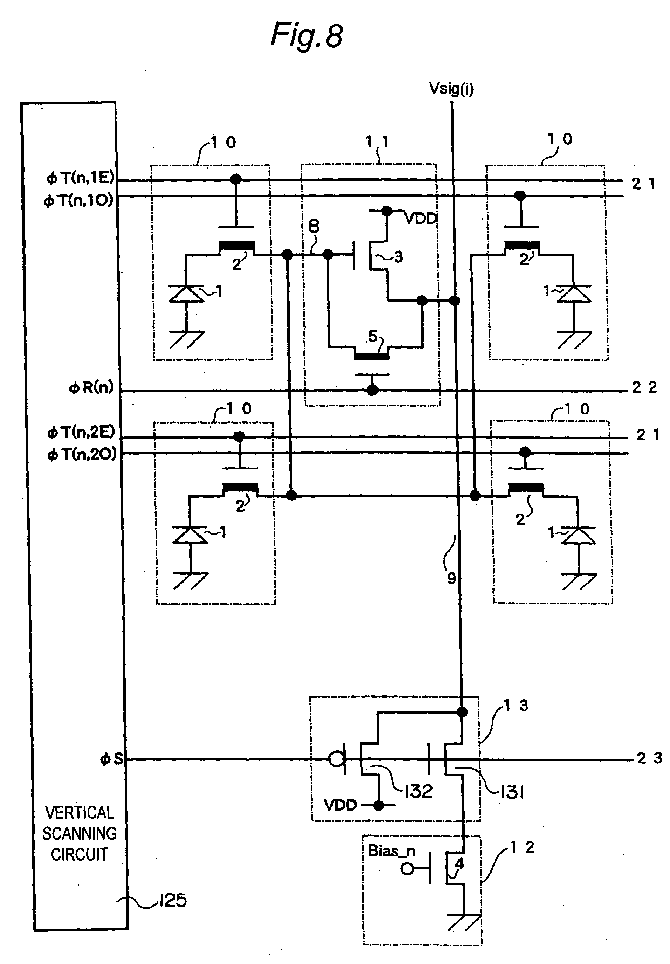

Fig. 8 is a circuit diagram showing the construction of a two-dimensional amplifying solid-state imaging device as one example of the amplifying solid-state imaging device of the fourth embodiment of the present invention.

Although the common single charge amplification mechanism 11 has been provided for the photoelectric conversion and transfer sections 10 and 10 of the upper and lower two rows in the third embodiment, a common single charge amplification mechanism 11 is provided for the photoelectric conversion and transfer sections 10, 10, 10 and 10 of the left and right two columns by upper and lower two rows in the fourth embodiment. Therefore, the single charge amplification mechanism 11 constructed of a single signal charge storage portion 8, a single MOS transistor 3 as the charge amplification part and a signal single reset transistor 5 exist for the four photoelectric conversion and transfer sections 10, 10, 10 and 10. One pixel is constructed of one photoelectric conversion and transfer section 10 and the common single charge amplification mechanism 11.

As shown in Fig. 8, a vertical scanning circuit 125 as one example of the control section outputs drive pulses $\phi T(n,1E)$ and $\phi T(n,2E)$ to the gates of the transfer transistors 2 and 2 of the photoelectric conversion and transfer sections 10 and 10 of the even-number columns and outputs drive pulses $\phi T(n,1O)$ and $\phi T(n,2O)$ to the gates of the transfer transistors 2 and 2 of the photoelectric conversion and transfer sections 10 and 10 of the odd-number columns.

In the two-dimensional amplifying solid-state imaging device of the construction, the vertical scanning circuit 125 outputs drive pulses $\phi T(n,1E)$, $\phi T(n,2E)$, $\phi T(n,1O)$ and $\phi T(n,2O)$ for discrimination between the first row and the second row of the n-th group and between the even-number columns and the odd-number columns to the gates of the transfer transistors 2, 2, 2 and 2 and transfers the signal charge from one of the photodiodes 1, 1, 1 and 1 included in the read pixel to the signal charge storage portion 8 through the transfer transistor 2.

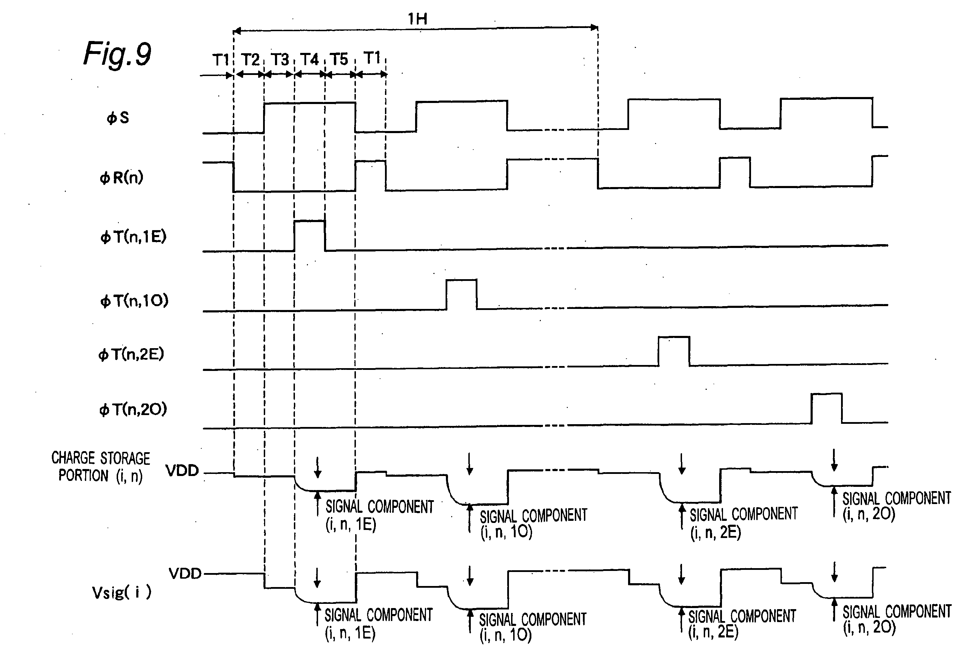

As shown in Fig. 9, with regard to the operation of the two-dimensional amplifying solid-state imaging device of the fourth embodiment, operations of the selected pixel (read pixel) during the periods T1 through T5 are quite the same as the operations of the selected pixel of the third embodiment during the periods T1 through T5 shown in Fig. 7, and operations of the non-selected pixel (non-read pixel) are quite the same as the operations of the non-selected pixel of the third embodiment shown in Fig. 7. That is, the point that the row select transistor, which has conventionally been necessary in one pixel, is made unnecessary to reduce the transistor count per pixel by turning on the reset transistor 5 by the drive pulse $\phi R(n)$ from the vertical scanning circuit 125 to short-circuit the vertical signal line 9 and the signal charge storage portion 8 and make the MOS transistor 3 as the charge amplification part inoperative in the non-selected pixel is similar to that of the third embodiment.

Moreover, the two-dimensional amplifying solid-state imaging device of the fourth embodiment has a blooming suppression function by virtue of the functions of the depletion mode transfer transistor 2 and the depletion mode reset transistor 5 even at the time of imaging a high-luminance subject as in the first and third embodiments.

Furthermore, in the two-dimensional amplifying solid-state imaging device of the fourth embodiment, one common section 11 per four pixels, i.e., the single amplification mechanism 11 is included in the four pixels. Therefore, six transistors/four pixels = 1.5 transistors/one pixel in the fourth embodiment in contrast to the two transistors/one pixel in the amplifying solid-state imaging device of the third embodiment. That is, in the amplifying solid-state imaging device of the fourth embodiment, the transistor count per pixel can still further be reduced.

Although the photoelectric conversion and transfer sections 10, 10, 10 and 10 of the two rows by two columns share one charge amplification mechanism 11 in the present fourth embodiment, photoelectric conversion and transfer sections 10, 10, 10 and 10 of three or more rows by three or more columns may share one charge amplification mechanism 11. In the case, the transistor count per pixel can further be reduced, and this can extremely contribute to the reduction in the pixel size.

FIFTH EMBODIMENT

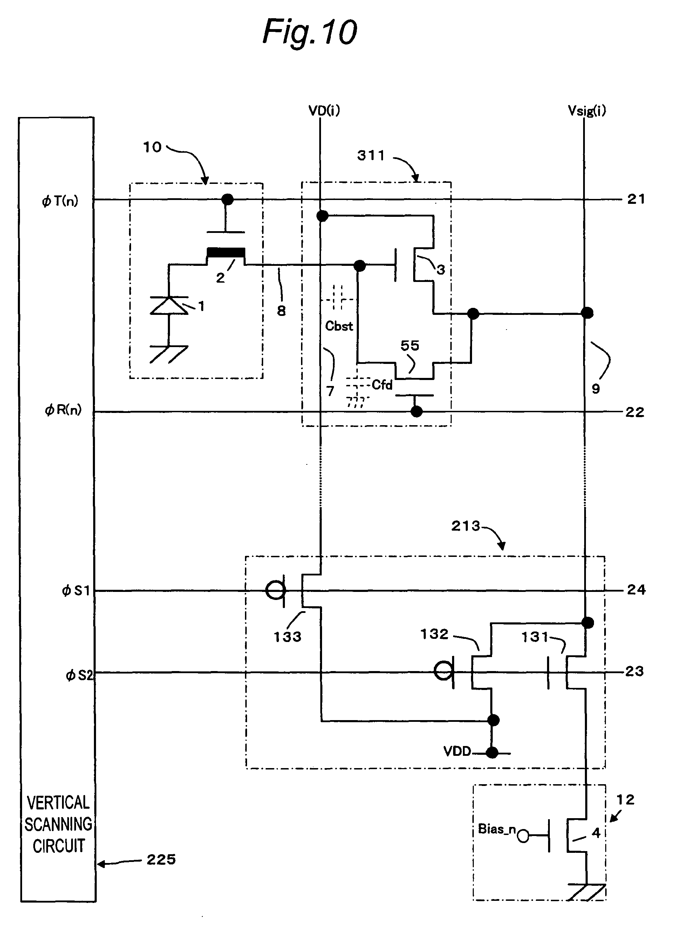

Fig. 10 is a circuit diagram showing the construction of a two-dimensional amplifying solid-state imaging device as one example of the amplifying solid-state imaging device of the fifth embodiment of the present invention.

A photoelectric conversion and transfer section 10 existing in each of all the pixels, a charge amplification mechanism 311 included in the pixel, a constant current load circuit 12 constructed of a constant current load transistor 4 common to all the charge amplification mechanisms 311 existing in the i-th column, and a switch circuit 213 that performs switchover among the constant current load circuit 12 constructed of the constant current load transistor 4, a constant voltage (power supply voltage VDD in Fig. 10) and a floating state are shown. The reference numeral 225 denotes a vertical scanning circuit 225 as one example of the control section. The photoelectric conversion and transfer section 10 and the charge amplification mechanism 311 constitute a unit pixel.

Fig. 10 shows only the n-th row and the i-th column of pixels arranged in a matrix form of a plurality of rows and a plurality of columns. It is noted that n and i are natural numbers.

The photoelectric conversion and transfer section 10 is constructed of a photodiode 1 as one example of the photoelectric conversion element and a depletion mode transfer transistor 2.

The charge amplification mechanism 311 is constructed of a signal charge storage portion 8 connected to the output side of the transfer transistor 2 of the photoelectric conversion and transfer section 10, a MOS transistor 3, which serves as one example of the charge amplification part and has an input terminal connected to the signal charge storage portion 8, a power source side terminal connected to the vertical power line 7 and an output terminal connected to a vertical signal line 9 as a signal line, and a reset transistor 55 connected between a gate that serves as the input terminal of the MOS transistor 3 and a source that serves as the output terminal. The MOS transistor 3 constitutes a drain-grounded type source follower circuit with the constant current load transistor 4.

Moreover, a switch circuit 213 for performing switchover of the vertical signal line 9 between the constant current load circuit 12 and a constant voltage (power supply voltage VDD in this case) that is the reset voltage and switchover of the vertical power line 7 as the power line of the MOS transistor 3 between the constant voltage (power supply voltage VDD in this case) and the floating state is provided. The switch circuit 213 is constructed of mutually antiphase switching transistors 131 and 132 controlled by a drive pulse $\phi$S2 from a vertical scanning circuit 225 and a switching transistor 133 controlled by a drive pulse $\phi$S1.

The reset transistor 55, the vertical scanning circuit 225 and the switch circuit 213 constitute one example of the voltage input mechanism that applies a constant voltage (reset voltage) to the signal charge storage portion 8 from the vertical signal line 9 side by short-circuiting the gate and the source of the MOS transistor 3 during the non-read period of the signal charge.

As shown in Fig. 10, a transfer transistor drive signal line 21 from the vertical scanning circuit 225 is connected to the gates of the transfer transistors 2 of a plurality of photoelectric conversion and transfer sections 10 (only one is shown in Fig. 10) arranged in the direction of row. Moreover, a reset transistor drive signal line 22 from the vertical scanning circuit 225 is connected to the gates of the reset transistors 55 of the charge amplification mechanisms 311. Moreover, a drive pulse $\phi$T(n) is applied from the vertical scanning circuit 225 to the gate of the transfer transistor 2 of the photoelectric conversion and transfer section 10 of the n-th row via the transfer transistor drive signal line 21, and a drive pulse $\phi$R(n) is applied from the vertical scanning circuit 225 to the gate of the reset transistor 55 of the charge amplification mechanism 311 of the n-th row via the reset transistor drive signal line 22. Moreover, the drive pulse $\phi$S2 is applied from the vertical scanning circuit 225 to the gates of the mutually antiphase transistors 131 and 132 of the switch circuit 213 via the switch circuit drive signal line 23 in order to perform switchover of the vertical signal line 9 between the constant current load circuit 12 and the constant voltage (power supply voltage VDD). Moreover, the drive pulse $\phi$S1 is applied from the vertical scanning circuit 225 to the gate of the transistor 133 of the switch circuit 213 via the switch circuit drive signal line 24 in order to perform switchover of the vertical power line 7 between the constant voltage (power supply voltage VDD) and the floating state. The transistor 133 constitutes one example of the power supply control mechanism.

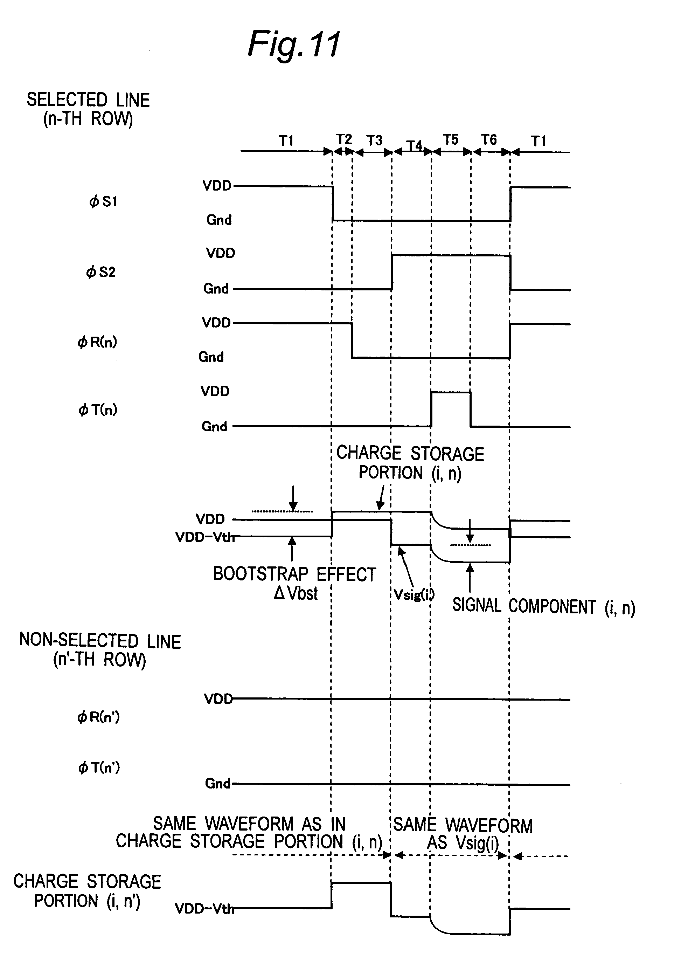

The operation of the two-dimensional amplifying solid-state imaging device shown in Fig. 10 is described with reference to Fig. 11. Reference is first made to a case where the n-th row is the selected row, i.e., the row to be read.

As shown in Fig. 11, the drive pulse $\phi$S1 inputted to the switch circuit 213 has high level, and the drive pulse $\phi$S2 has low level during the period T1. Therefore, the vertical power line 7 is put in the floating state, and the vertical signal line 9 is connected to the power supply voltage VDD. Since the drive pulse $\phi$R(n) applied to the gate of the reset transistor 55 of the charge amplification mechanism 311 of the n-th row has high level, the voltage of the signal charge storage portion 8 becomes VDD-Vth, and the voltage of the vertical power line 7 becomes VDD-Vth-Vth. In this case, Vth is the threshold voltage of the MOS transistor 3 and the reset transistor 55.

Next, during the period T2, the drive pulse $\phi$S1 goes low level to turn on the transistor 133, and the vertical power line 7 comes to have the power supply voltage VDD. The potential of the signal charge storage portion 8 is raised by $\Delta$Vbst due to the bootstrap attributable to the coupling capacitance with the vertical power line 7 and becomes VDD-Vth+ΔVbst. In this case,

$$\Delta Vbst = 2*Vth*Cbst/(Cbst + Cfd) \quad ...Equation\ (1)$$

where Cbst represents the coupling capacitance between the signal charge storage portion 8 and the vertical power line 7, and Cfd represents the parasitic capacitance of the signal charge storage portion 8. For example, ΔVbst = 0.4 V when Cbst = 1 fF, Cfd = 2 fF and Vth = 0.6 V.

The coupling capacitance Cbst is made to have a sufficiently large value by positioning the signal charge storage portion 8 and the vertical power line 7 close to each other and arranging them so that overlap portions are increased, allowing the bootstrap effect to be obtained.

Next, during the period T3, the drive pulse φR (n) goes low level, and the reset transistor 55 is turned off.

Next, during the period T4, the drive pulse φS2 goes high level, and the vertical signal line 9 is connected to the constant current load transistor 4. As a result, the output of the source follower circuit constructed of the MOS transistor 3 as the charge amplification part and the constant current load transistor 4 is outputted to the vertical signal line 9 using the signal charge storage portion 8 that has come to have the potential of VDD-Vth+ΔVbst due to the bootstrap effect as an input. The voltage of the vertical signal line 9 obtained at this time is the reference voltage of the pixel.

The next period T5 is the period during which the signal charge that has been photoelectrically converted by the photodiode 1 of the pixel is read to the signal charge storage portion 8. The drive pulse φT(n) goes high level to turn on the transfer transistor 2 of the n-th row, and the signal charge accumulated in the photodiode 1 of the n-th row is read to the signal charge storage portion 8 through the transfer transistor 2.

After the signal charge accumulated in the photodiode 1 is completely read to the signal charge storage portion 8, the drive pulse φT(n) goes low level during the next period T6, and the transfer transistor 2 is turned off. Therefore, a voltage shifted by a change due to the transfer of the signal charge from the voltage during the period T4 is maintained in the signal charge storage portion 8, and the maintained signal level (potential) is amplified by the source follower circuit and outputted to the vertical signal line 9. The potential of the vertical signal line 9 obtained at this time becomes the signal of the pixel.

The voltage of the signal charge storage portion 8 becomes VDD-Vth, and the voltage of the vertical power line 7 becomes VDD-Vth-Vth during the next period as in the period T1.

If a signal of a difference between the voltage of the period T4 and the voltage of the period T6 on the vertical signal line 9 is taken by a CDS (Correlated Double Sampling) circuit, a differential amplifier circuit or a clamping circuit (since these circuits are well-known to those skilled in the art, no description is provided for the circuits) in the subsequent stage, then an effective signal due to the electric charge generated by the light incident on the pixel of the n-th row is read.

Reference is next made to the case of the non-selected n'-th row. In this case, n' represents a natural number. When the n'-th row is non-selected, i.e., when the signal charge is not read, the drive pulse φR (n') from the vertical scanning circuit 225 consistently has high level, and the drive pulse φT(n') consistently has low level.

During the periods T1 through T2, the same operation as the row to be read is carried out to produce the same voltage change in the charge storage portion 8.

During the period T3, the drive pulse φR(n') still has high level, and the charge storage portion 8 has same voltage.

During the period T4, the source follower output of the selected n-th row is outputted as a low voltage to the vertical signal line 9. On the other hand, because the drive pulse φR(n') of the non-selected n'-th row still has high level, the voltages of the charge storage portion 8 and the vertical signal line 9 become same via the reset transistor 55. This means that the gate-to-source voltage of the MOS transistor 3 as the amplification part is 0 V, and the MOS transistor 3 as the amplification part of the non-selected n'-th row enters the OFF-state in which the drain-to-source current does not flow and does not operate as a source follower circuit.

In the period T5, since the drive pulse φT(n') applied to the gate of the transfer transistor 2 keeps low level, the transfer transistor 2 keeps the OFF-state, and the signal charge is not read from the photodiode 1 to the charge storage portion 8. Moreover, the MOS transistor 3 becomes the OFF-state in which the drain-to-source current does not flow as in the period T4 and does not operate as a source follower circuit. The period T6 is similar to the period T5.

Moreover, the greater part of the periods is the period T1 (non-read period) in each pixel, and there is a charge discharge path from the signal charge storage , portion 8 to the vertical signal line 9 via the reset transistor 55 during the non-read period. Therefore, although an excessive signal charge is generated in the photodiode 1 at the time of imaging a high-luminance subject, the excessive signal charge is discharged to the vertical signal line 9 through the depletion mode transfer transistor 2, which is turned on as a result that the source potential is lowered due to the excessive signal charge consequently causing a rise in the voltage difference between the gate and the source and the voltage difference being close to zero, and further through the signal charge storage portion 8 and the reset transistor 55. Since the excessive signal charge generated in the photodiode 1 at the time of imaging a high-luminance subject is discharged to the vertical signal line 9 through the drain path constituted of the depletion mode transfer transistor 2, the signal charge storage portion 8 and the reset transistor 55. Therefore, the two-dimensional amplifying solid-state imaging device comes to have a function to suppress the blooming at the time of imaging a high-luminance subject.

According to the two-dimensional amplifying solid-state imaging device of the construction, the vertical signal line 9 and the signal charge storage portion 8 are short-circuited at the time of signal output by turning on the reset transistor 55 by the drive pulse $\phi$R (n') from the vertical scanning circuit 225 with regard to the non-selected n'-th row (non-read row). Therefore, the MOS transistor 3, which is the charge amplification part of the non-selected n'-th row, can be made inoperative without employing a row select transistor. As described above, the row select transistor, which has conventionally been necessary in one pixel, becomes unnecessary. Therefore, the transistor count per pixel can be reduced, and the pixel can be formed with a small size. By allocating an area equivalent to the areal reduction for the transistor to the photodiode, an amplifying solid-state imaging device of high sensitivity can be provided even if the pixel size is small.

Moreover, according to the two-dimensional amplifying solid-state imaging device of the construction, the voltage of the charge storage portion 8 can be set to a high voltage by the bootstrap effect, and the range of the operating voltage of the source follower circuit can be extended, allowing the circuit operation to have a high dynamic range. If it is possible to increase the capacitance Cbst by devising the pixel layout, higher dynamic range operation can be achieved. For example, when Cbst = 2fF (Cfd and Vth have similar values), $\Delta$Vbst is raised to 0.6 V.

Moreover, since the buried type photodiode 1 is employed as the photoelectric conversion element of the pixel, transfer of the signal charge from the photodiode 1 can be made complete, and a low-noise high-quality image can be obtained. The blooming suppression function is additionally provided even at the time of imaging a high-luminance subject.

SIXTH EMBODIMENT

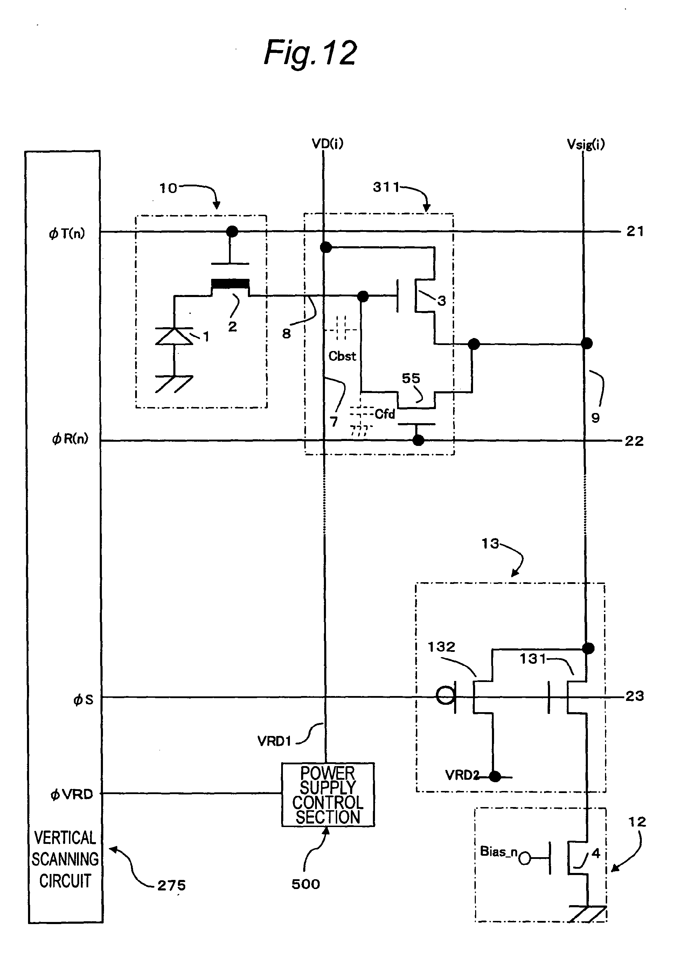

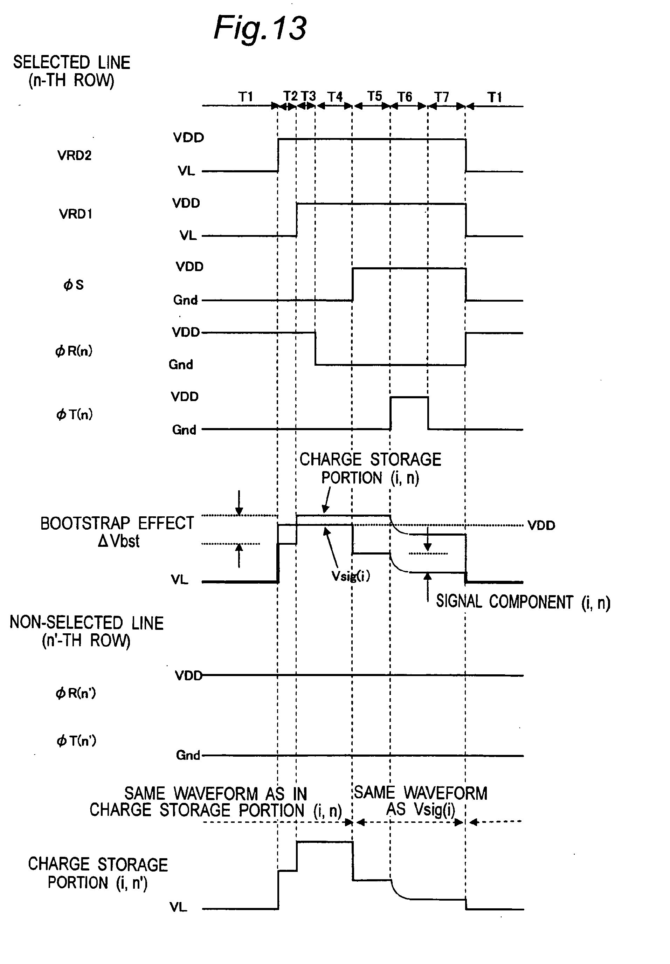

Fig. 12 is a circuit diagram showing the construction of a two-dimensional amplifying solid-state imaging device as one example of the amplifying solid-state imaging device of the sixth embodiment of the present invention. In Fig. 12, the same components as the components of the fifth embodiment shown in Fig. 10 are denoted by the same reference numerals, and no description is provided therefor. A difference to Fig. 10 resides in that the vertical power line 7 is connected to a prescribed voltage VRD1, and the voltage applied to the vertical signal line 9 is a prescribed voltage VRD2. The prescribed voltages VRD1 and VRD2 change as shown in Fig. 13. The prescribed voltage VRD1 is outputted from a power supply control section 500 as one example of a control power mechanism and has high level VDD during the periods T3 through T7 and a low level VL during the periods T1 and T2. The power supply control section 500 is controlled by a drive pulse $\phi$VRD1 from a vertical scanning circuit 275. Moreover, the prescribed voltage VRD2 is outputted from a power supply control section (not shown) and has the high level VDD during the periods T2 through T7 and the low level VL during the period T1.

The operation of the two-dimensional amplifying solid-state imaging device shown in Fig. 12 is described with reference to Fig. 13. Reference is first made to the case where the n-th row is the selected row, i.e., the row to be read.

As shown in Fig. 13, since the drive pulse $\phi$S inputted to the switch circuit 13 has low level during the period T1, the vertical signal line 9 is connected to the prescribed voltage VRD2. Moreover, since the drive pulse $\phi$R(n) applied to the gate of the reset transistor 55 of the charge amplification mechanism 311 of the n-th row has high level, all of the voltage of the vertical power line 7, the voltage of the signal charge storage portion 8 and the voltage of the vertical signal line 9 eventually come to have the low level VL. In this case, the voltage VL is a voltage of about 1 V, with which the depletion mode transfer transistor 2 is not turned on. This is because the injection of electric charge into the photodiode 1 via the depletion mode transfer transistor 2 disadvantageously occurs with a voltage lower than the voltage.

Next, the prescribed voltage VRD2 becomes the power supply voltage VDD during the period T2, and therefore, the voltage of the signal charge storage portion 8 becomes VDD-Vth. In this case, Vth is the threshold voltage of the MOS transistor 3 and the reset transistor 55.

Next, the prescribed voltage VRD1 becomes the power supply voltage VDD during the period T3, and therefore, the voltage of the signal charge storage portion 8 rises by $\Delta$Vbst due to a similar bootstrap effect and becomes VDD-Vth+$\Delta$Vbst. In this case,

$$\Delta Vbst = (VDD - VL)*Cbst/(Cbst + Cfd) \quad ...Equation\ (2)$$

$\Delta$Vbst = (VDD - VL)*Cbst/(Cbst + Cfd) ...Equation (2) where Cbst similarly represents the coupling capacitance between the signal charge storage portion 8 and the vertical power line 7, and Cfd represents the parasitic capacitance of the signal charge storage portion 8. For example, $\Delta$Vbst = 0.6 V when Cbst = 1 fF, Cfd = 2 fF, VL = 1 V and VDD = 2.8 V.

The coupling capacitance Cbst is made to have a sufficiently large value by positioning the signal charge storage portion 8 and the vertical power line 7 close to each other and arranging them so that overlap portions are increased, allowing the bootstrap effect to be obtained.

Next, during the period T4, the drive pulse φR(n) goes low level, and the reset transistor 55 is turned off.

Next, during the period T5, the drive pulse φS goes high level, and the vertical signal line 9 is connected to the constant current load transistor 4. As a result, the output of the source follower circuit constructed of the MOS transistor 3 as the charge amplification part and the constant current load transistor 4 is outputted to the vertical signal line 9 using the signal charge storage portion 8 that has come to have the voltage of VDD-Vth+ΔVbst due to the bootstrap effect as an input. The voltage of the vertical signal line 9 obtained at this time is the reference voltage of the pixel.

The next period T6 is the period during which the signal charge that has been photoelectrically converted by the photodiode 1 of the pixel is read to the signal charge storage portion 8. The drive pulse φT(n) goes high level to turn on the transfer transistor 2 of the n-th row, and the signal charge accumulated in the photodiode 1 of the n-th row is read to the signal charge storage portion 8 through the transfer transistor 2.

After the signal charge accumulated in the photodiode 1 is completely read to the signal charge storage portion 8, the drive pulse φT(n) goes low level during the next period T7, and the transfer transistor 2 is turned off. Therefore, a voltage shifted by a change due to the transfer of the signal charge from the voltage during the period T5 is maintained in the signal charge storage portion 8, and the maintained signal level (voltage) is amplified by the source follower circuit and the amplified signal is outputted to the vertical signal line 9. The voltage of the vertical signal line 9 obtained at this time becomes the signal of the pixel.

The voltage of the signal charge storage portion 8 and the voltage of the vertical power line 7 become VL during the next period as in the period T1.

If a signal of a difference between the voltage during the period T5 and the voltage during the period T7 is taken by a CDS (Correlated Double Sampling) circuit, a differential amplifier circuit or a clamping circuit (since these circuits are well-known to those skilled in the art, no description is provided for the circuits) in the subsequent stage on the vertical signal line 9, then an effective signal due to the electric charge generated by the light incident on the pixel of the n-th row is read.

The case of the non-selected n'-th row is similar to that of the fifth embodiment.

Moreover, the greater part of the periods is the period T1 (non-read period) in each pixel, and there is a charge discharge path from the signal charge storage portion 8 to the vertical signal line 9 via the reset transistor 55 during the non-read period. Therefore, the function to suppress the blooming at the time of imaging a high-luminance subject is provided.

Moreover, as in the fifth embodiment, according to the two-dimensional amplifying solid-state imaging device of the construction, the vertical signal line 9 and the signal charge storage portion 8 are short-circuited at the time of signal output by turning on the reset transistor 55 by the drive pulse φR(n') from the vertical scanning circuit 25 with regard to the non-selected n'-th row (non-read row). Therefore, the MOS transistor 3, which is the charge amplification part of the non-selected n'-th row, can be made inoperative without employing a row select transistor. As described above, the row select transistor, which has conventionally been necessary in one pixel, becomes unnecessary. Therefore, the transistor count per pixel can be reduced, and the pixel can be formed with a small size. By an area equivalent to the areal reduction for the transistor to the photoelectric conversion element, an amplifying solid-state imaging device of high sensitivity can be provided even if the pixel size is small.

Moreover, according to the two-dimensional amplifying solid-state imaging device of the construction, the voltage of the charge storage portion 8 can be set to a higher voltage by the bootstrap effect as compared with that of the fifth embodiment, and the range of the operating voltage of the source follower circuit can be extended, allowing the circuit operation to have a high dynamic range. If it is possible to increase the capacitance Cbst by devising the pixel layout, higher dynamic range operation can be achieved. For example, when Cbst = 2fF (Cfd, Vth and VL have similar values), ΔVbst is raised to 0.9 V.

Moreover, since the buried type photodiode 1 is similarly employed as the photoelectric conversion element of the pixel, transfer of the signal charge from the photodiode 1 can be made complete, and a low-noise high-quality image can be obtained. The blooming suppression function is also additionally provided even at the time of imaging a high-luminance subject.

SEVENTH EMBODIMENT

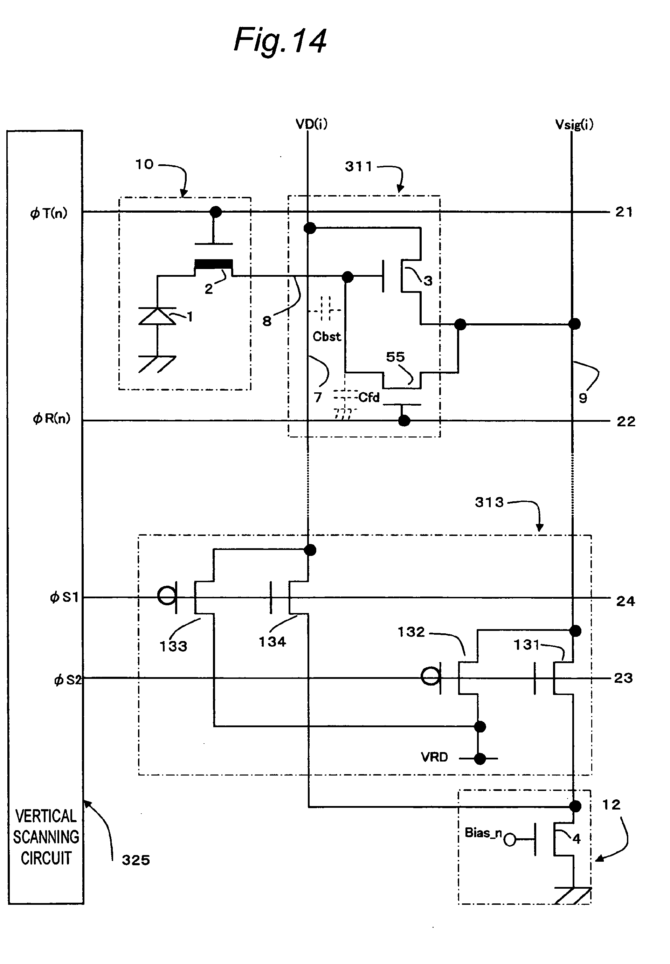

Fig. 14 is a circuit diagram showing the construction of a two-dimensional amplifying solid-state imaging device as one example of the amplifying solid-state imaging device of the seventh embodiment of the present invention. In Fig. 14, the same components as the components of the sixth embodiment shown in Fig. 12 are denoted by the same reference numerals, and no description is provided therefor. A difference from Fig. 12 resides in that the vertical power line 7 and the vertical signal line 9 are connected to the prescribed voltage VRD and the constant current load circuit 12 via a switch circuit 313 controlled by the control pulses φS1 and φS2. The switch circuit 313 constitutes one example of the power supply control mechanism.

The operation of the two-dimensional amplifying solid-state imaging device shown in Fig. 14 is described with reference to Fig. 6. Reference is first made to the case where the n-th row is the selected row, i.e., the row to be read.

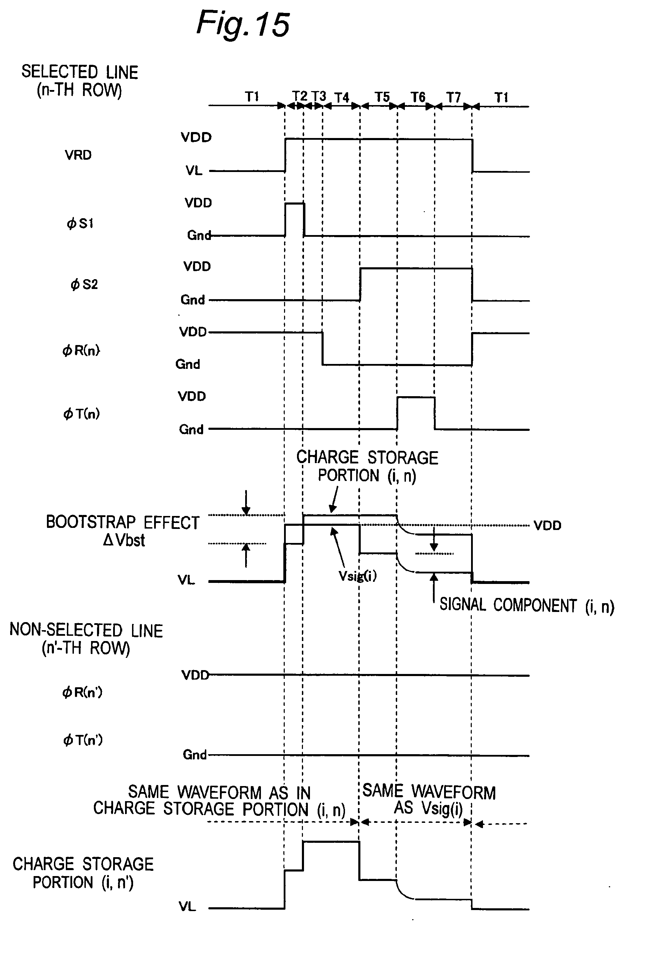

As shown in Fig. 15, both the drive pulses $\phi$S1 and $\phi$S2 inputted to the switch circuit 313 have low level during the period T1, and therefore, the vertical signal line 9 is connected to the voltage VRD. Moreover, the drive pulse $\phi$R(n) applied to the gate of the reset transistor 55 of the charge amplification mechanism 311 of the n-th row has high level, and therefore, all of the voltage of the vertical power line 7, the voltage of the signal charge storage portion 8 and the voltage of the vertical signal line 9 eventually come to have the voltage VRD, i.e., VL in this case. In this case, the voltage VL is a voltage of about 1 V, with which the depletion mode transfer transistor 2 is not turned on as in the sixth embodiment.

Next, the prescribed voltage VRD becomes the power supply voltage VDD during the period T2, and therefore, the voltage of the signal charge storage portion 8 becomes VDD-Vth. On the other hand, the drive pulse $\phi$S1 goes high level, and therefore, the vertical power line 7 is connected to the constant current load 12 and comes to have a voltage VDD-Vth-Vth.

In this case, Vth is the threshold voltage of the MOS transistor 3 and the reset transistor 55 as described hereinabove.

Next, the drive pulse $\phi$S1 goes low level during the period T3, and therefore, the vertical power line 7 comes to have the prescribed VRD, i.e., a voltage VDD in this case. Therefore, the voltage of the signal charge storage portion 8 is raised by $\Delta$Vbst due to the bootstrap effect and becomes VDD-Vth+$\Delta$Vbst. In this case,

$$\Delta Vbst = 2*Vth*Cbst/(Cbst + Cfd) \quad ...Equation\ (3)$$

so that the bootstrap effect $\Delta$Vbst similar to that of the fifth embodiment is obtained.

The period T5 and subsequent periods are similar to those of the sixth embodiment.

If a signal of a difference between the voltage during the period T5 and the voltage during the period T7 is taken by a CDS (Correlated Double Sampling) circuit, a differential amplifier circuit or a clamping circuit (since these circuits are well-known to those skilled in the art, no description is provided for the circuits) in the subsequent stage on the vertical signal line 9, then an effective signal due to the electric charge generated by the light incident on the pixel of the n-th row is read.

The case of the non-selected n'-th row is similar to that of the fifth embodiment.

Moreover, the greater part of the periods is the period T1 (non-read period) in each pixel, and there is a charge discharge path from the signal charge storage portion 8 to the vertical signal line 9 via the reset transistor 55 during the non-read period. Therefore, the function to suppress the blooming at the time of imaging a high-luminance subject is provided.

Moreover, as in the fifth embodiment, according to the two-dimensional amplifying solid-state imaging device of the construction, the vertical signal line 9 and the signal charge storage portion 8 are short-circuited at the time of signal output by turning on the reset transistor 55 by the drive pulse $\phi$R(n') from a vertical scanning circuit 325 with regard to the non-selected n'-th row (non-read row). Therefore, the MOS transistor 3, which is the charge amplification part of the non-selected n'-th row, can be made inoperative without employing a row select transistor. As described above, the row select transistor, which has conventionally been necessary in one pixel, becomes unnecessary. Therefore, the transistor count per pixel can be reduced, and the pixel can be formed with a small size. By allocating an area equivalent to the areal reduction for the transistor to the photoelectric conversion element, an amplifying solid-state imaging device of high sensitivity can be provided even if the pixel size is small.

Moreover, according to the two-dimensional amplifying solid-state imaging device of the construction, the voltage of the charge storage portion 8 can be set to a higher voltage by the bootstrap effect, and the range of the operating voltage of the source follower circuit can be extended, allowing the circuit operation to have a high dynamic range. If it is possible to increase the capacitance Cbst by devising the pixel layout, higher dynamic range operation can similarly be achieved.

Moreover, since the buried type photodiode 1 is similarly used as the photoelectric conversion element of the pixel, transfer of the signal charge from the photodiode 1 can be made complete, and a low-noise high-quality image can be obtained. The blooming suppression function is additionally provided at the time of imaging a high-luminance subject.

EIGHTH EMBODIMENT

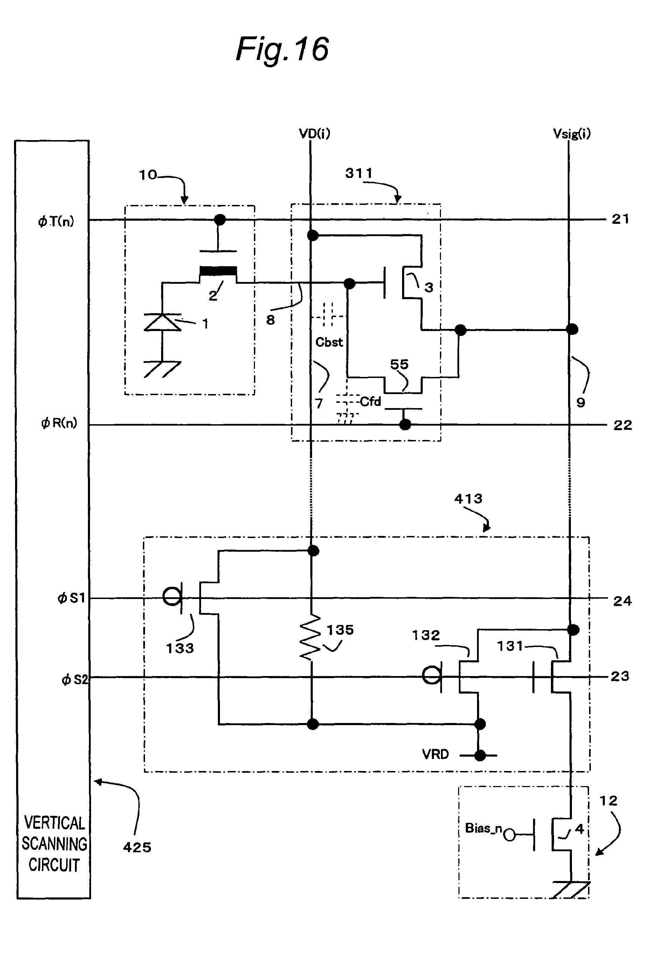

Fig. 16 is a circuit diagram showing the construction of a two-dimensional amplifying solid-state imaging device as one example of the amplifying solid-state imaging device of the eighth embodiment of the present invention. In Fig.

16, the same components as the components of the seventh embodiment shown in Fig. 14 are denoted by the same reference numerals, and no description is provided therefor. A difference from Fig. 14 resides in that a high resistance 135 is inserted in parallel with the transistor 133 in place of the transistor 134 in the switch circuit 413 for connecting the vertical power line 7 to the constant current load 12. The transistor 133 in the ON-state is one example of the low resistance.

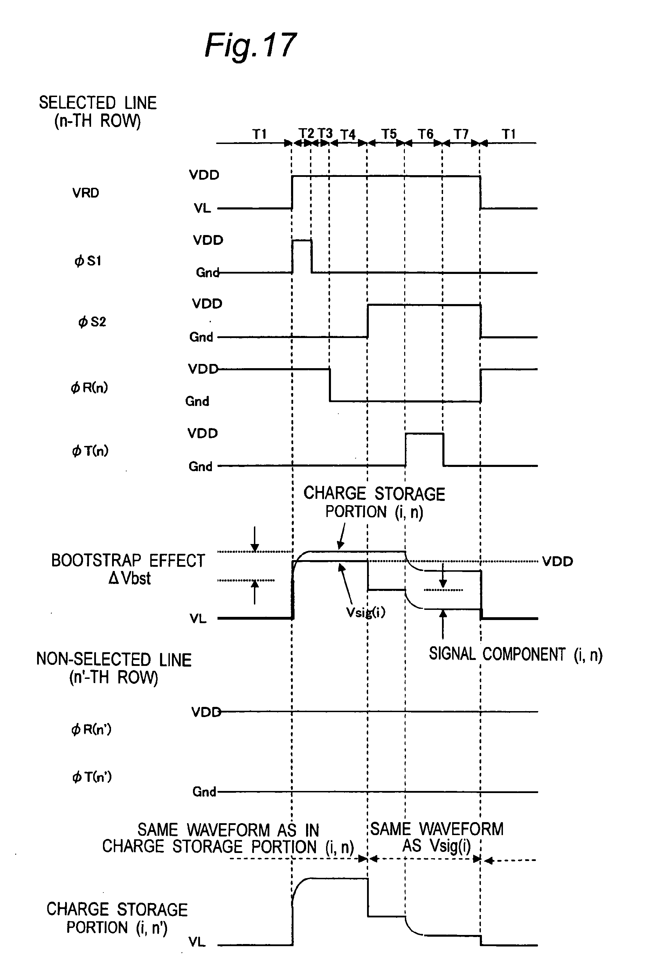

The operation of the two-dimensional amplifying solid-state imaging device shown in Fig. 16 is described with reference to Fig. 17. Reference is first made to the case where the n-th row is the selected row, i.e., the row to be read.

As shown in Fig. 17, both the drive pulses $\phi$S1 and $\phi$S2 inputted to the switch circuit 413 as one example of the power supply control mechanism have low level during the period T1, and therefore, the vertical signal line 9 is connected to the prescribed voltage VRD. Moreover, the drive pulse $\phi$R(n) applied to the gate of the reset transistor 55 of the charge amplification mechanism 311 of the n-th row has high level, and therefore, all of the voltage of the vertical power line 7, the voltage of the signal charge storage portion 8 and the voltage of the vertical signal line 9 eventually come to have the prescribed voltage VRD, i.e., VL in this case. In this case, the voltage VL is a voltage of about 1 V, with which the depletion mode transfer transistor 2 is not turned on as in the sixth embodiment.

Next, during the period T2, the prescribed voltage VRD becomes the power supply voltage VDD, and therefore, the voltage of the signal charge storage portion 8 becomes VDD-Vth. On the other hand, the control pulse $\phi$S1 goes high level, and therefore, the vertical power line 7 connected with a high resistance slowly rises from VL to VDD. The time constant is sufficiently greater than the time constant with which the voltage of the signal charge storage portion 8 becomes VDD-Vth, and therefore, the voltage of the signal charge storage portion 8 further gradually rises by $\Delta$Vbst by the bootstrap effect after reaching VDD-Vth and becomes VDD-Vth+$\Delta$Vbst. In this case,

$$\Delta Vbst = (VDD - VL)*Cbst/(Cbst + Cfd) \quad ...Equation\ (4)$$

and a bootstrap effect $\Delta$Vbst similar to that of the fifth embodiment is obtained.

Next, the control pulse $\phi$S1 goes low level during the period T3, and therefore, the vertical power line 7 is connected to the prescribed voltage VRD, or the voltage VDD with a low resistance in this case, the low-resistance connection subsequently continued.

The period T4 and the subsequent periods are similar to those of the sixth embodiment.

If a signal of a difference between the voltage during the period T5 and the voltage during the period T7 is similarly taken by a CDS (Correlated Double Sampling) circuit, a differential amplifier circuit or a clamping circuit (since these circuits are well-known to those skilled in the art, no description is provided for the circuits) in the subsequent stage on the vertical signal line 9, then an effective signal due to the electric charge generated by the light incident on the pixel of the n-th row is read.

The case of the non-selected n'-th row is similar to that of the fifth embodiment.

Moreover, the greater part of the periods is the period T1 (non-read period) in each pixel, and there is a charge discharge path from the signal charge storage portion 8 to the vertical signal line 9 via the reset transistor 55 during the non-read period. Therefore, the function to suppress the blooming at the time of imaging a high-luminance subject is similarly provided.

As in the fifth embodiment, according to the two-dimensional amplifying solid-state imaging device of the construction, the vertical signal line 9 and the signal charge storage portion 8 are short-circuited by turning on the reset transistor 5 by the drive pulse $\phi$R(n') from the vertical scanning circuit 25 with regard to the non-selected n'-th row (non-read row). Therefore, the MOS transistor 3, which is the charge amplification part of the non-selected n'-th row, can be made inoperative without employing a row select transistor. As described above, the row select transistor, which has conventionally been necessary in one pixel, becomes unnecessary. Therefore, the transistor count per pixel can be reduced, and the pixel can be formed with a small size. By allocating an area equivalent to the areal reduction for the transistor to the photoelectric conversion element, an amplifying solid-state imaging device of high sensitivity can similarly be provided even if the pixel size is small.

Moreover, according to the two-dimensional amplifying solid-state imaging device of the construction, the voltage of the charge storage portion 8 can be set to a higher voltage by the bootstrap effect, and the range of the operating voltage of the source follower circuit can be extended, allowing the circuit operation to have a higher dynamic range. If it is possible to increase the capacitance Cbst by devising the pixel layout, higher dynamic range operation can similarly be achieved.

Moreover, since the buried type photodiode 1 is similarly employed as the photoelectric conversion element of the pixel, transfer of the signal charge from the photodiode 1 can be made complete, and a low-noise high-quality image can be obtained. The blooming suppression function is similarly additionally provided at the time of imaging a high-luminance subject.

NINTH EMBODIMENT

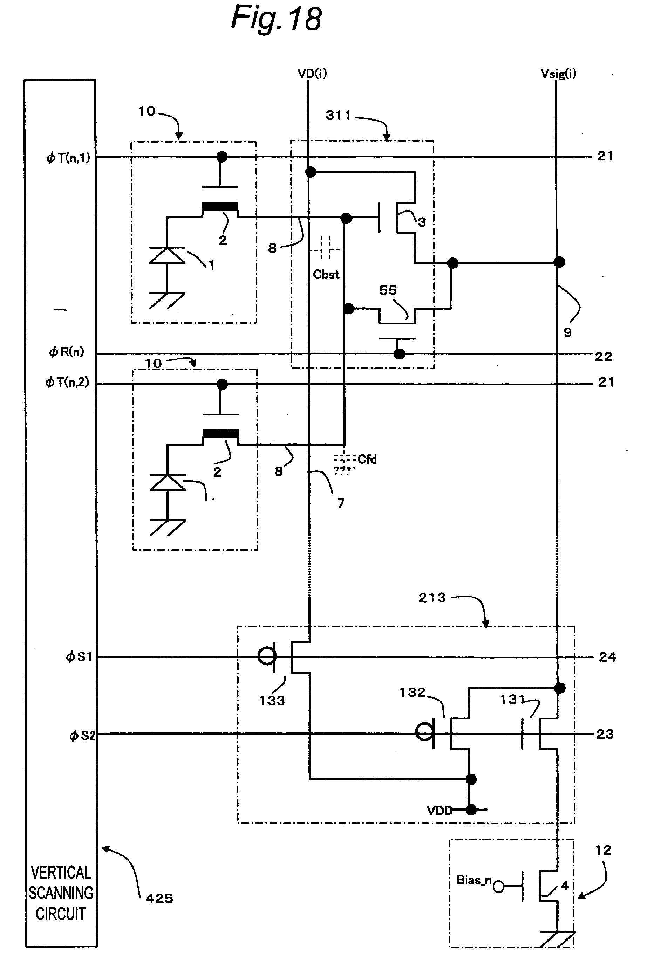

Fig. 18 is a circuit diagram showing the construction of a two-dimensional amplifying solid-state imaging device as one example of the amplifying solid-state imaging device of the ninth embodiment of the present invention. The same components as the components of the fifth embodiment shown in Fig. 10 are denoted by the same reference numerals, and no description is provided therefor.

The two-dimensional amplifying solid-state imaging device of the ninth embodiment has the same construction as that of the fifth embodiment except that two photoelectric conversion and transfer sections 10 and 10 share one charge amplification mechanism 311, and a vertical scanning circuit 425 is different from the vertical scanning circuit 225 of the fifth embodiment in accordance with it.

In Fig. 18, only two rows and one column of the pixels out of a plurality of rows and a plurality of columns are shown, and the other rows and columns are not shown. In Fig. 18, the pixels of the n-th group and the i-th column are shown grouping every two rows in a group. In the present specification, the first row of the rows of the n-th group is represented as (n, 1) row, and the second row of the rows of the n-th group is represented as (n, 2) row.

Each pixel is constructed of the photoelectric conversion and transfer section 10 and the charge amplification mechanism 311, and a single signal charge amplification mechanism 311 is shared by the pixel of the (n, 1) row and the pixel of the (n, 2) row. That is, the single charge amplification mechanism 311 constructed of a single signal charge storage portion 8, the MOS transistor 3 as a single charge amplification part and the single reset transistor 55 is shared by the pixel of the (n, 1) row and the pixel of the (n, 2) row.

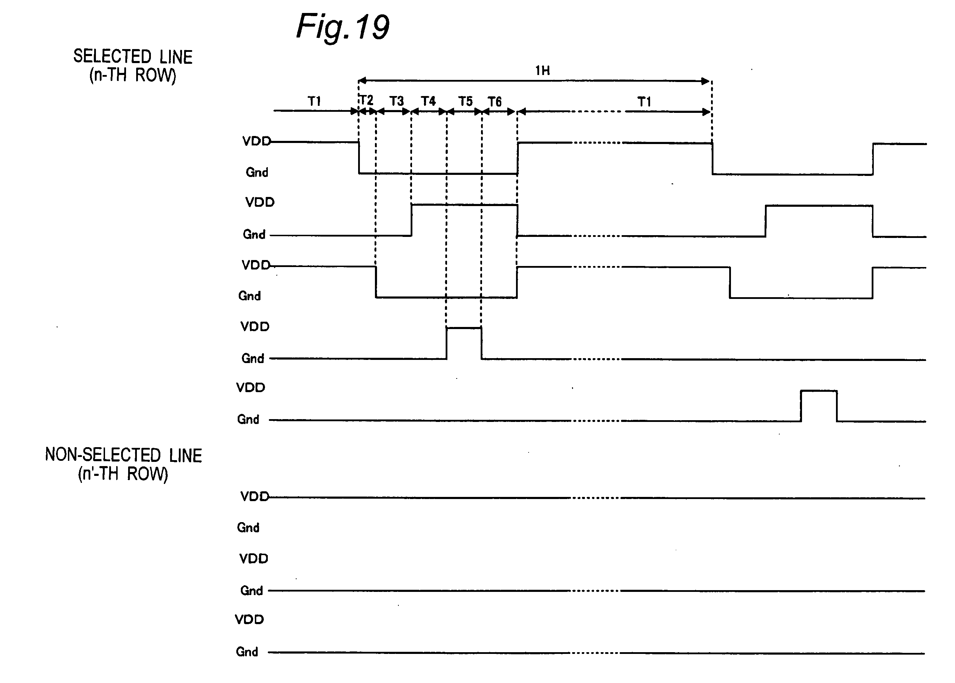

The operation of the two-dimensional amplifying solid-state imaging device of the ninth embodiment of Fig. 18 is described with reference to Fig. 19.

Reference is first made to a case where the (n, 1) row and the (n, 2) row of the n-th group are sequentially selected. As shown in Figs. 18 and 19, the operation during the periods T1 through T6 when the pixel of the (n, 1) row is selected (read) is quite the same as the operation during the periods T1 through T6 shown in Fig. 11 when the pixel of the n-th row of the fifth embodiment is selected. As shown in Fig. 19, the drive pulse $\phi T(n, 1)$ from the vertical scanning circuit 425 goes high level to turn on the transfer transistor 2 of the (n, 1) row, and the signal charge accumulated in the photodiode 1 is transferred to the signal charge storage portion 8. Then, the signal charge is amplified and read to the vertical signal line 9 from the MOS transistor 3 as the signal charge amplification part. After one horizontal scanning period (1H), the pixel of the (n, 2) row is similarly read. That is, a drive pulse $\phi T(n,2)$ from the vertical scanning circuit 425 goes high level to turn on the transfer transistor 2 of the (n, 2) row, and the signal charge accumulated in the photodiode 1 is transferred to the signal charge storage portion 8. Then, the signal charge is amplified and read to the vertical signal line 9 from the MOS transistor 3 as the signal charge amplification part.

Next, as shown in Fig. 19, the case of the non-selected n'-th row is quite the same as that of the example of the amplifying solid-state imaging device of the fifth embodiment of Fig. 10. That is, since the reset transistor 55 is in the ON-state due to the drive pulse $\phi R(n')$ from the vertical scanning circuit 425, the MOS transistor 3 for the amplification of the non-selected n'-th row (during non-read) does not operate as a source follower circuit.

As described above, in the two-dimensional amplifying solid-state imaging device, the vertical signal line 9 and the signal charge storage portion 8 are short-circuited by turning on the reset transistor 55 with regard to the non-selected row. Therefore, the MOS transistor 3 as the signal charge amplification part of the non-selected row can be made inoperative. Therefore, the row select transistor, which has conventionally been necessary in one pixel, becomes unnecessary, and the transistor count per pixel can be reduced.

Moreover, as in the fifth embodiment, the two-dimensional amplifying solid-state imaging device of the ninth embodiment comes to have a blooming suppression function even at the time of imaging a high-luminance subject by virtue of the functions of the depletion mode transfer transistor 2 and the depletion mode reset transistor 5.

Furthermore, the two-dimensional amplifying solid-state imaging device of the ninth embodiment includes one common portion 11 per two pixels, i.e., a single amplification mechanism 11 in two pixels. Therefore, four transistors/two pixels = two transistors/one pixel in the ninth embodiment in contrast to the three transistors/one pixel in the amplifying solid-state imaging device of the fifth embodiment. That is, in the amplifying solid-state imaging device of the ninth embodiment, the transistor count per pixel can further be reduced.

Although the photoelectric conversion and transfer sections 10 and 10 of two rows share one charge amplification mechanism 311 in the ninth embodiment, photoelectric conversion and transfer sections 10, 10, 10, ... of three or more rows may share a single charge amplification mechanism 311. In the case, the transistor count per pixel can further be reduced, and this can extremely contribute to the reduction in the pixel size.

Embodiments of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. An amplifying solid-state imaging device comprising:

   a plurality of photoelectric conversion and transfer sections (10) which respectively have a photoelectric conversion element (1) and a transfer transistor (2) that transfers a signal charge of the photoelectric conversion element (1) and are each provided for each pixel;
   at least one charge amplification part (3), which has an input terminal connected to a signal charge storage portion (8) to which an output side of the transfer transistor (2) of the photoelectric conversion and transfer section (10) is connected and an output terminal connected to a signal line (9), amplifies and reads a quantity of the signal charge, and is included in the pixel; and
   at least one voltage input mechanism (5, 13, 25; 55, 13, 25; 5, 13, 75; 5, 13, 125; 55, 213, 225; 55, 13, 275; 55, 313, 325; 55, 413, 425; 55, 213, 425) that applies a voltage from the signal line side to the signal charge storage portion (8) by short-circuiting the input terminal and the output terminal of the charge amplification part (3) during a non-read period of the signal charge.

2. The amplifying solid-state imaging device as claimed in claim 1, wherein
   the photoelectric conversion element (1) is a buried type photodiode, and
   the transfer transistor (2) is of a depletion mode.

3. The amplifying solid-state imaging device as claimed in claim 1, wherein
   the charge amplification part (3) is comprised of a MOS transistor (3) of a source follower type, of which the input terminal is its gate and the output terminal is its source, and
   the voltage input mechanism (5, 13, 25; 55, 13, 25; 5, 13, 75; 5, 13, 125; 55, 213, 225; 55, 13, 275; 55, 313, 325; 55, 413, 425; 55, 213, 425) stops amplification operation of the charge amplification part (3) by short-circuiting the gate and the source of the MOS transistor (3) during the non-read period of the signal charge.

4. The amplifying solid-state imaging device as claimed in claim 1, wherein
   the voltage input mechanism (5, 13, 25; 55, 13, 25; 5, 13, 75; 5, 13, 125; 55, 213, 225; 55, 13, 275; 55, 313, 325; 55, 413, 425; 55, 213, 425) comprises:

   a reset transistor (5, 55) connected between the input terminal and the output terminal of the charge amplification part (3);
   a switch circuit (13, 213, 313, 413) that performs switchover of a voltage of the signal line (9) to a constant voltage; and
   a control section (25, 75, 125, 225, 275, 325, 425) that turns on the reset transistor (5, 55) during the non-read period of the signal charge.

5. The amplifying solid-state imaging device as claimed in claim 4, wherein
   the reset transistor (5) is of a depletion mode.

6. The amplifying solid-state imaging device as claimed in claim 4, wherein
   the reset transistor (55) is of an enhancement mode,
   the device comprising a voltage generation circuit (30) that includes a transistor (155) of a structure identical to a structure of the reset transistor (55) and outputs the constant voltage to the switch circuit (13), wherein
   the voltage generation circuit (30) and the reset transistor (55) are formed on an identical semiconductor substrate.

7. The amplifying solid-state imaging device as claimed in claim 4, wherein
   the switch circuit (13, 213, 313, 413) performs switchover of the signal line (9) between the constant voltage and a load circuit (12) of a source follower type.

8. The amplifying solid-state imaging device as claimed in claim 1, wherein
   output sides of the plurality of transfer transistors (2) of the plurality of photoelectric conversion and transfer sections (10) are connected to an input side of one charge amplification part (3), and the charge amplification part (3) is shared by a plurality of pixels.

9. The amplifying solid-state imaging device as claimed in claim 1, comprising:

a power supply control mechanism (133, 500, 313, 413) that controls a voltage applied to a power line (7) of the charge amplification part (3).

10. The amplifying solid-state imaging device as claimed in claim 9, wherein
the power line (7) of the charge amplification part (3) and the signal charge storage portion (8) are arranged so as to have a coupling capacitance such that a voltage of the signal charge storage portion (8) is raised when a voltage of the power line (7) is raised by the power supply control mechanism (133, 500, 313, 413).

11. The amplifying solid-state imaging device as claimed in claim 9, wherein
the photoelectric conversion element (1) is a buried type photodiode, and
the transfer transistor (2) is of a depletion mode.

12. The amplifying solid-state imaging device as claimed in claim 9, wherein
the charge amplification part (3) is comprised of a MOS transistor (3) of a source follower type, of which the input terminal is its gate and the output terminal is its source, and
the voltage input mechanism (55, 213, 225; 55, 13, 275; 55, 313, 325; 55, 413, 425; 55, 213, 425) stops amplification operation of the charge amplification part (3) by short-circuiting the gate and the source of the MOS transistor (3) during the non-read period of the signal charge.

13. The amplifying solid-state imaging device as claimed in claim 9, wherein
the voltage input mechanism (55, 213, 225; 55, 13, 275; 55, 313, 325; 55, 413, 425; 55, 213, 425) comprises:

a reset transistor (55) connected between the input terminal and the output terminal of the charge amplification part (3);
a switch circuit (13, 213, 313, 413) that performs switchover of a voltage of the signal line to a constant voltage; and
a control section (225, 275, 325, 425) that turns on the reset transistor (55) during the non-read period of the signal charge.

14. The amplifying solid-state imaging device as claimed in claim 13, wherein
the switch circuit (13, 213, 313, 413) performs switchover of the signal line (9) between the constant voltage and a load circuit (12) of a source follower type.

15. The amplifying solid-state imaging device as claimed in claim 9, wherein
the power supply control mechanism (133) performs switchover of the power line (7) of the charge amplification part (3) between a constant voltage (VDD) and a floating potential.

16. The amplifying solid-state imaging device as claimed in claim 9, wherein
the power supply control mechanism (500) performs switchover of the power line (7) of the charge amplification part (3) between mutually different prescribed voltages (VDD, VL).

17. The amplifying solid-state imaging device as claimed in claim 9, wherein
the power supply control mechanism (313) performs switchover of the power line (7) of the charge amplification part (3) among mutually different prescribed voltages (VDD, VL) and a load circuit (12) of a source follower type.

18. The amplifying solid-state imaging device as claimed in claim 9, wherein
the power supply control mechanism (413) connects the power line (7) of the charge amplification part (3) with the prescribed voltage via a switchable low resistance (133) or a high resistance (135).

19. The amplifying solid-state imaging device as claimed in claim 9, wherein
output sides of the plurality of transfer transistors (2) of the plurality of photoelectric conversion and transfer sections (10) are connected to an input side of one charge amplification part (3), and the charge amplification part (3) is shared by a plurality of pixels.

## Fig.1

## Fig.2

SELECTED LINE
(n-TH ROW)

T1    T2    T3    T4    T5    T1

$\phi$ S

$\phi$ R(n)

$\phi$ T(n)

CHARGE STORAGE
PORTION (i, n)                    VDD

SIGNAL COMPONENT (i, n)

Vsig(i)                    VDD

SIGNAL COMPONENT (i, n)

NON-SELECTED LINE
(n'-TH ROW)

$\phi$ R(n')

$\phi$ T(n')

CHARGE STORAGE
PORTION (i, n')          VDD
(SIMILAR TO Vsig(i))

21

# Fig.3

SELECTED LINE
(n-TH ROW)

Tsht     T1   T2   T3   T4   T5   T1

$\phi$S

$\phi$R(n)

$\phi$T(n)

CHARGE STORAGE
PORTION (i, n)    VDD

SIGNAL COMPONENT
(i, n)

VDD

Vsig(i)

SIGNAL COMPONENT
(i, n)

NON-SELECTED LINE
(n'-TH ROW)

$\phi$R(n')

$\phi$T(n')

CHARGE STORAGE
PORTION (i, n')    VDD
(SIMILAR TO Vsig(i))

# Fig.4

# Fig.5

## Fig.6

# Fig.7

SELECTED LINE
(n-TH ROW)

1H

T1 | T2 | T3 | T4 | T5 | T1

$\phi$S

$\phi$R(n)

$\phi$T(n,1)

$\phi$T(n,2)

CHARGE STORAGE
PORTION (i, n)     VDD

SIGNAL COMPONENT
(i, n, 1)

SIGNAL COMPONENT
(i, n, 2)

Vsig(i)     VDD

SIGNAL COMPONENT
(i, n, 1)

SIGNAL COMPONENT
(i, n, 2)

NON-SELECTED LINE
(n'-TH ROW)

$\phi$R(n')

$\phi$T(n',1)

$\phi$T(n',2)

CHARGE STORAGE
PORTION (i, n')
(SIMILAR TO Vsig(i))     VDD

26

## Fig.8

*Fig.9*

1H

T1 T2 T3 T4 T5 T1

φS

φR(n)

φT(n,1E)

φT(n,1O)

φT(n,2E)

φT(n,2O)

CHARGE STORAGE
PORTION (i, n)    VDD

SIGNAL COMPONENT
(i, n, 1E)

SIGNAL COMPONENT
(i, n, 1O)

SIGNAL COMPONENT
(i, n, 2E)

SIGNAL COMPONENT
(i, n, 2O)

Vsig( i )    VDD

SIGNAL COMPONENT
(i, n, 1E)

SIGNAL COMPONENT
(i, n, 1O)

SIGNAL COMPONENT
(i, n, 2E)

SIGNAL COMPONENT
(i, n, 2O)

EP 1 713 250 A2

## Fig.10

# Fig.11

SELECTED LINE
(n-TH ROW)

T1　T2　T3　T4　T5　T6　T1

φS1

VDD

Gnd

φS2

VDD

Gnd

φR(n)

VDD

Gnd

φT(n)

VDD

Gnd

CHARGE STORAGE
PORTION (i, n)

VDD

VDD−Vth

BOOTSTRAP EFFECT
ΔVbst

Vsig(i)

SIGNAL COMPONENT (i, n)

NON-SELECTED LINE
(n'-TH ROW)

φR(n')

VDD

φT(n')

Gnd

SAME WAVEFORM AS IN
CHARGE STORAGE PORTION (i, n)

SAME WAVEFORM
AS Vsig(i)

CHARGE STORAGE
PORTION (i, n')

VDD−Vth

# Fig.12

## Fig.13

SELECTED LINE
(n-TH ROW)

T1 T2 T3 T4 T5 T6 T7 T1

VRD2
VDD
VL

VRD1
VDD
VL

$\phi S$
VDD
Gnd

$\phi R(n)$
VDD
Gnd

$\phi T(n)$
VDD
Gnd

CHARGE STORAGE
PORTION (i, n)

BOOTSTRAP EFFECT
$\Delta Vbst$

VDD

Vsig(i)

VL

SIGNAL COMPONENT (i, n)

NON-SELECTED LINE
(n'-TH ROW)

$\phi R(n')$
VDD

$\phi T(n')$
Gnd

SAME WAVEFORM AS IN
CHARGE STORAGE PORTION (i, n)

SAME WAVEFORM
AS Vsig(i)

CHARGE STORAGE
PORTION (i, n')
VL

# Fig.14

# Fig.15

SELECTED LINE
(n-TH ROW)

T1　T2 T3　T4　　T5　　T6　　T7　　T1

VRD

VDD
VL

$\phi$S1

VDD
Gnd

$\phi$S2

VDD
Gnd

$\phi$R(n)

VDD
Gnd

$\phi$T(n)

VDD
Gnd

CHARGE STORAGE
PORTION (i, n)

BOOTSTRAP EFFECT
$\Delta$Vbst

VDD

VL

Vsig(i)

SIGNAL COMPONENT (i, n)

NON-SELECTED LINE
(n'-TH ROW)

$\phi$R(n')

VDD

$\phi$T(n')

Gnd

SAME WAVEFORM AS IN
CHARGE STORAGE PORTION (i, n)

SAME WAVEFORM
AS Vsig(i)

CHARGE STORAGE
PORTION (i, n')

VL

## Fig.16

# Fig.17

SELECTED LINE
(n-TH ROW)

T1　T2 T3 T4　T5　T6　T7　T1

VRD

VDD
VL

φS1

VDD
Gnd

φS2

VDD
Gnd

φR(n)

VDD
Gnd

φT(n)

VDD
Gnd

CHARGE STORAGE
PORTION (i, n)

BOOTSTRAP EFFECT
ΔVbst

VDD

Vsig(i)

VL

SIGNAL COMPONENT (i, n)

NON-SELECTED LINE
(n'-TH ROW)

φR(n')

VDD

φT(n')

Gnd

SAME WAVEFORM AS IN
CHARGE STORAGE PORTION (i, n)

SAME WAVEFORM
AS Vsig(i)

CHARGE STORAGE
PORTION (i, n')

VL

36

## Fig.18

Fig.19

SELECTED LINE
(n-TH ROW)

NON-SELECTED LINE
(n'-TH ROW)

## Fig.20  PRIOR ART

# Fig.21   PRIOR ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11112018 B

**Non-patent literature cited in the description**

- **H TAKAHASHI et al.** *ISSCC Digest of Technical Papers,* 2004, 108-109